(19) **Europäisches Patentamt**

**European Patent Office**

**Office européen des brevets**

(11) **EP 1 703 305 A2**

(12) **EUROPEAN PATENT APPLICATION**

(43) Date of publication:
20.09.2006 Bulletin 2006/38

(51) Int Cl.:
*G02B 5/02* (2006.01)      *G02B 6/00* (2006.01)

(21) Application number: 06004262.9

(22) Date of filing: 02.03.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.03.2005 JP 2005068182**

(71) Applicant: **DAICEL CHEMICAL INDUSTRIES, LTD.**
**Sakai-shi, Osaka 590-8501 (JP)**

(72) Inventors:
• **Hiraishi, Masanori**
**Osaka-shi**
**Osaka 559-0033 (JP)**

• **Suda, Satoshi**
**Himeji-shi**
**Hyogo 672-8044 (JP)**
• **Izumitani, Tatsuo**
**Himeji-shi**
**Hyogo 671-1242 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Anisotropic scattering sheet**

(57)      An anisotropic scattering sheet (9a) comprising at least an anisotropic light scattering layer, wherein the anisotropic light scattering layer comprises a continuous phase (10) and a dispersed phase (11) which are different in refraction index from each other, the mean aspect ratio of the dispersed phase is more than 1, and the major axis directions of each dispersed phase are oriented to a given direction, and wherein the sheet is a heat-treated sheet. In the treatment, the heat-treating temperature may be not less than 70°C, and in the typical treatment, heat-treatment is conducted after the sheet is oriented by a monoaxial stretching through roll calendaring.

The present invention ensures to provide an anisotropic scattering sheet stably usable for a long period of time without causing luminance unevenness.

Fig.1

**Description**

FIELD OF THE INVENTION

The present invention relates to an anisotropic scattering sheet excellent in heat stability and useful for uniform light emission of a display apparatus (a plane or flat display apparatus), a production process thereof, and a display apparatus using the sheet. More precisely, the present invention relates to an anisotropic scattering sheet (diffusing film) excellent in heat stability and useful for a transmittable (transmission type) or reflectable (reflection type) liquid crystal display apparatus or a projection television. Moreover, the present invention relates to an anisotropic scattering sheet (diffusing film) excellent in heat stability as well as capable of restricting change of the luminance even if a visual angle to a display surface of a display unit turns (or changes), a production process thereof, and a display apparatus using the sheet. In particular, the present invention relates to an anisotropic scattering sheet which is capable of restricting change of the luminance even when a visual angle from the lateral (horizontal) direction changes against a display surface of the transmittable liquid crystal display apparatus in some degree, and the sheet which is usable without giving eye fatigue; a transmittable (transmission type) liquid crystal display apparatus using the sheet; and a plane or flat light source device (or unit) thereof.

BACKGROUND OF THE INVENTION

In a backlight type display apparatus (a liquid crystal display apparatus) illuminating a display panel (e.g. , a liquid crystal display module) from its backside, a flat or plane light source unit (or a backlight unit) is disposed on the backside of the display panel. The plane light source unit comprises, for example, a tubular light source such as fluorescent tube (cold cathode tube) disposed adjacent to a lateral side of a light guide, the light guide for guiding a light from the tubular light source to a display panel, and a reflector disposed opposite side to the display panel of the light guide. In such a plane light source unit, since a light from the fluorescent tube is reflected by the reflector and the reflected light is guided by the light guide, a diffusing or scattering film is usually disposed between the tubular light source and the display panel for uniformly illuminating the display panel from behind. As the diffusing film, is employed a polycarbonate film or a polyester film being transparent and highly heat-resistant and each comprising dispersed resin microfine particles (resin beads) or light-transmissive inorganic microfine particles. However, when such a diffusing film is used, the excessive decrease of the luminance in a certain direction (the axis-direction of the fluorescent tube) is inevitably caused due to its isotropy of light diffusion. As a result, it is unable to illuminate the display panel uniformly with the high luminance.

Therefore, in Japanese Patent Application Laid-Open No. 231315/1999 (JP-11-231315A) (Patent document 1), 84357/1999 (JP-11-84357A) (Patent document 2), and 84376/1999 (JP-11-84376A) (Patent document 3), an optical element such as a prismatic lens is interposed between a diffusing film (diffuser) and a liquid crystal layer to thereby refract the diffused light so that the light will be incident perpendicularly on the liquid crystal display surface, thus upholding the luminance.

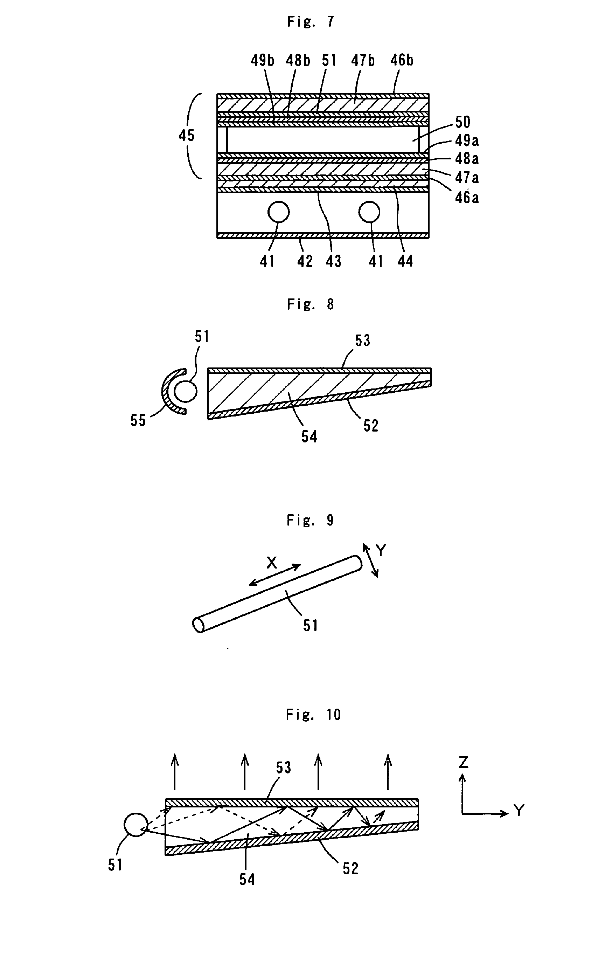

For example, as a plane or flat display apparatus of which the image display area has a flat surface (a flat type display apparatus), an apparatus as illustrated in Fig. 7 is known. The apparatus comprises a flat display unit (e.g., a transmittable liquid crystal display unit) 45 and a flat light source unit adapted to illuminate the display unit from its back side. The plane or flat light source unit comprises at least one fluorescent discharge tube (cold cathode tube) 41; a reflector 42 for reflecting a light, disposed on the back side of the fluorescent discharged tube 41; a diffuser 43 which is interposed between the fluorescent discharged tube 41 and a display unit 45, and which diffuses the light to uniformly illuminate the display unit 45; and a prism sheet 44 laminated on the unit side of the diffuser 43. The flat display unit 45, in the case of a liquid crystal display unit, comprises a first polarizing film 46a, a first glass substrate 47a, a first electrode 48a formed on the glass substrate, a first alignment layer 49a laminated on the electrode, a liquid crystal layer 50, a second alignment layer 49b, a second electrode 48b, a color filter 51, a second glass substrate 47b, and a second polarizing film 46b as successively built up (laminated) in that order. In such a display apparatus, the display unit can be directly illuminated from the back side by the built-in fluorescent tube (cold cathode tube) 41.

Moreover, there has been known an apparatus comprising a backlight unit having a light guide illustrated in Fig. 8 as the backlight system of the flat display apparatus of Fig. 7. This backlight unit has a fluorescent tube (cold cathode tube) 51 and a reflector member 55 disposed in parallel with the fluorescent tube, with a light guide 54 having a diffuser 53 at top and a reflector 52 at bottom being disposed in the direction of light emission from the fluorescent tube. Incidentally, the thickness of the light guide 54 at the fluorescent tube side is larger than that of the other side, so that the light from the fluorescent tube 51 can be reflected in a forward direction. The light emerged from the emerging surface of the light guide is diffused by the diffuser 53, and the diffused light is incident on a flat display apparatus (not shown) constructed (laminated) on the diffuser.

When such a backlight unit is used, the display panel can be illuminated by focusing a diffused light with use of a prism sheet, and in contrast to the backlight unit of Fig. 7, the emission distribution may appear uniform over the surface but a detailed observation of the emission distribution reveals that the distribution is still not as uniform as desired. Thus, as shown in Figs. 9 and 10, the emission distribution (luminance distribution) in the longitudinal (axial) direction (X-direction) of the fluorescent tube (cold cathode tube) 51 is relatively uniform similar to the apparatus or device of Fig. 7, but the light from the fluorescent tube (cold cathode tube) in the Y-direction which is perpendicular to the X-direction is repeatedly reflected by the reflector 52 and advances in the Z-direction (such a direction as the liquid crystal display unit is disposed) which is perpendicular to the XY plane so that the emission distribution (luminance distribution) in the Y-direction is distorted (in a zigzag pattern), thus failing to uniformize the luminance distribution.

Thus, in the usual backlight type display apparatuses, the emission distribution (luminance distribution) in the direction perpendicular to the longitudinal direction (X-direction) of the fluorescent tube is not uniform, and a streak-like directionality (linear dark areas) is produced in the emission distribution. In order to improve in uniformity of the luminance, a diffusing film having an excellent light-diffusing property may be used. In usual, however, since a diffusing film isotropically scatters an incident light, the larger a scattering angle becomes, the greater a scattering intensity decreases. Referring to the degree of decrease in the scattering intensity when the scattering angle becomes larger, in the case of a commonly used diffusing film, in about 9° of the half width, the decay (extinction) of the intensity is, for example, $F(0°)/F(18°)$ = about 12 and $F(0°)/F(23°)$ = about 60, wherein $\theta$ represents the scattering angle, and F represents the scattered light intensity (or the intensity of scattered light), and the decay of the scattering intensity is extreme depending on the angle. Therefore, the light intensity, i.e., intensity of light scattered at 30° or more of the scattering angle is very small.

From such a viewpoint, use of a prism sheet improves the luminance at a scattering angle from the front to 20°. That is, regarding the direction that a prism sheet focuses a light, use of one piece of the prism sheet can realize the scattering angle up to about 18°. However, if the scattering angle is more than 18°, the scattering intensity (luminance) decreases rapidly. In the method in which two pieces of the prism sheet is disposed in the direction perpendicular to each other, the luminance of the display apparatus can be uniformized isotropically without depending on the angle. However, the applicable angle is only about up to 20° in length and breadth. When the scattering angle is more than 20°, the luminance is deteriorated rapidly in comparison with the luminance in the case of using no prism sheets.

Such a display apparatus restricts an angle of vision (visual angle or viewing angle) for a user of the display apparatus, and therefore, the user cannot recognize the display of the display surface visually in a wide angle. Thus the display apparatus is inconvenient and affects a sense of fatigue. Therefore, a diffusing sheet, which can scatter a light over broad and wide angles, has investigated. However, the luminance is extremely deteriorated in such a diffusing sheet. Accordingly, in order to improve in the luminance, a light source having strong emission ability should be used.

Japanese Patent Application Laid-Open No. 314522/1992 (JP-4-314522A) (Patent document 4) describes an anisotropic light-scattering material comprising a transparent matrix and a transparent substance which is morphologically anisotropic and differing in the index of refraction (the refraction index) from the transparent matrix as uniformly dispersed in the matrix in a positional relationship shifted in an orderly and mutually parallel manner. Moreover, the literature discloses the preferred range of the aspect ratio of morphologically anisotropic substance is 15 to 30 and the length of minor axis is 1 to 2 $\mu$m. Specifically, the anisotropic light-scattering material is manufactured by a method which comprises kneading a low-melting low-density polyethylene for the transparent matrix resin with a high-melting polystyrene or a styrene-acrylonitrile copolymer for the transparent substance, extruding the resulting composition, and cooling the molten resin extruded in the form of a sheet under stretching with a large draft in the direction of extrusion. The anisotropic light-scattering material has been used as a lenticular lens for the projection television screen.

Japanese Patent Application Laid-Open No. 114013/1995 (JP-7-114013A) (Patent document 5) discloses a liquid crystal display apparatus in which a film or a sheet capable of scattering and transmitting an incident light is disposed on a display screen in order to improve in viewing angle properties. The literature discloses a film or a sheet in which a dispersed phase particle composed of a transparent resin and having a ratio of longitudinal axis to minor axis of not less than 10 and an average particle size of 0.5 to 70 $\mu$m is dispersed in a transparent resin matrix.

However, it is difficult to uniformly illuminate the display panel even if these films or sheets are employed in a display apparatus employing a tubular light source which has the anisotropic property in the emission distribution (luminance distribution).

On the contrary, Japanese Patent Application Laid-Open No. 1858/2002 (JP-2002-1858A) (Patent Document 6) discloses a laminated film comprising an anisotropic light scattering layer (1) which has a continuous phase and a particulate dispersed phase different in refraction index from each other, wherein the mean aspect ratio of the particulate dispersed phase is more than 1, and major axis of the particulate dispersed phase is oriented to one direction; and a transparent resin layer (2) which is laminated at least one side of the light scattering layer. The laminated film of this reference can restrict deterioration of luminance depending on the angle to the display surface of the transmittable display apparatus (particularly a transmittable liquid crystal display apparatus), and can lighten the angle dependency of the luminance. Moreover, the visual angle to the display surface can be enlarged and the display surface can be visually recognized in a high luminance.

Furthermore, Japanese Patent Application Laid-Open No. 214412/2002 (JP-2002-214412A) (Patent Document 7) discloses an anisotropic scattering sheet, wherein the sheet (or film) is capable of scattering an incident light in the light-advancing direction, and has a light-scattering characteristic F(θ) satisfying the following expression representing the relationship between the light-scattering angle θ and the scattered light intensity F in a range of θ= 4 to 30°:

$$Fy(\theta)/Fx(\theta) > 2$$

In the formula, Fx(θ) represents the light-scattering characteristic in the X-axial direction and Fy(θ) represents the light-scattering characteristic in the Y-axial direction which is perpendicular to the X-axial direction. The combination of the sheet of this reference and a prism sheet can restrict the deterioration of luminance (e.g., a luminance in one direction such as horizontal direction) depending on the angle to a display surface of a transmittable (transmission type) liquid crystal display apparatus.

However, the optical properties of the films or sheets described in these references are susceptible by long-time use. That is , although the films can be preferably used for a display apparatus such as a monitor, such a usage frequently exposes the films to a high temperature (e.g., a temperature of not less than 60°C). Accordingly, the film has got shrunken or wrinkled as using the film, then luminance unevenness is occurred in some cases probably because of the shrinkage or wrinkle. Therefore, these films or sheets cannot be stably used for a long period of time.

[Patent Document 1] JP-11-231315A (Claims)
[Patent Document 2] JP-11-84357A (Claims)
[Patent Document 3] JP-11-84376A (Claims)
[Patent Document 4] JP-4-314522A (Claims)
[Patent Document 5] JP-7-114013A (Claims)
[Patent Document 6] JP-2002-1858A (Claims)
[Patent Document 7] JP-2002-214412A (Claims)

## SUMMARY OF THE INVENTION

It is therefore an object of the present invention to provide an anisotropic scattering sheet stably usable over a long period of time without causing luminance unevenness, a production process thereof, and a display apparatus using the sheet.

It is another object of the present invention to provide an anisotropic scattering sheet maintaining a stable light scattering properties over a long time even using the sheet in the condition requiring heat resistance as a vehicle equipment and others, a production process thereof, and a display apparatus using the sheet.

It is a further object of the present invention to provide an anisotropic scattering sheet having a high heat stability (or a property of stabilizing heat resistance) and an isotropic light scattering properties in low angles (e.g., scattering angles not more than 5°), a production process thereof, and a display apparatus using the sheet.

The inventors of the present invention did much research to accomplish the above objects and found that: (1) by heat-treating (or aging) an optically anisotropic sheet in a predetermined temperature (e.g. , not less than 70°C), probably because of prevention of the sheet deformation (such as generation of shrinkage or wrinkle in the sheet), is obtained an anisotropic scattering sheet stably usable over a long time without causing luminance unevenness even if the sheet is used for a purpose (e.g., for vehicle equipment) to be exposed in a high temperature (e.g., a temperature of not less than 60° C): and further found that (2) by roughening-treating the sheet surface, is obtained a sheet not only having anisotropic scattering properties but also having isotropic light scattering properties at low angles.

That is, the anisotropic scattering sheet (or anisotropic light scattering sheet, hereinafter sometimes simply mentioned as "sheet") of the present invention is a sheet which comprises at least an anisotropic light scattering layer (sometimes referred to as anisotropic scattering layer or anisotropic layer) comprising a continuous phase and a dispersed phase, wherein the continuous phase and the dispersed phase are different in refraction index from each other, the mean aspect ratio of the dispersed phase is more than 1, and the major axis directions of each dispersed phase are oriented to a given (certain) direction, and the sheet is a heat-treated sheet.

The sheet has anisotropic light scattering properties, for example, the sheet may be a sheet which is capable of scattering an incident light in the light-advancing direction and has a light-scattering characteristic F(θ) satisfying the following expression representing the relationship between the light-scattering angle θ and the scattered light intensity F in a range of at least 8 = 10 to 30°:

$$Fy(\theta)/Fx(\theta) > 1$$

In the formula, Fx(θ) represents the light-scattering characteristic in the X-axial direction and Fy(θ) represents the light-scattering characteristic in the Y-axial direction which is perpendicular to the X-axial direction.

Moreover, the sheet may be a sheet having anisotropic light scattering properties, as well as isotropic light scattering properties at low angles, for example, may be a sheet which is capable of scattering an incident light in the light-advancing direction and has a light-scattering characteristic F(θ) satisfying the following expression representing the relationship between the light-scattering angle θ and the scattered light intensity F in a range of θ being not less than 5°:

Fy(θ)/Fx(θ) is approximately 1.

In the formula, Fx(θ) represents the light-scattering characteristic in the X-axial direction and Fy(θ) represents the light-scattering characteristic in the Y-axial direction which is perpendicular to the X-axial direction.

In the anisotropic scattering layer, the continuous phase may comprise a crystalline resin, and the dispersed phase may comprise a non-crystalline resin. The continuous phase may comprise, for example, a crystalline polypropylene-series resin. Further, the dispersed phase may comprise, for example, at least one resin selected from a non-crystalline copolyester-series resin and a polystyrenic resin. The weight ratio of the continuous phase relative to the dispersed phase may for example be about 99/1 to 50/50.

The sheet (e.g., anisotropic scattering layer in the sheet) may further comprise a compatibilizing agent for compatibilizing the continuous phase and the dispersed phase. In the sheet, the typical anisotropic light scattering layer may include a sheet in which the continuous phase comprises a crystalline polypropylene-series resin; the dispersed phase comprises at least one resin selected from a non-crystalline copolyester-series resin and a polystyrenic resin; and the compatibilizing agent comprises an epoxidized diene-series block copolymer; the weight ratio of the continuous phase relative to the dispersed phase is about 99/1 to 50/50; and the weight ratio of the dispersed phase relative to the compatibilizing agent is about 99/1 to 50/50.

The mean aspect ratio of the dispersed phase may be about 1.1 to 1000. The mean length of the minor axes of the dispersed phase may be about 0.1 to 10 μm.

The sheet may be a laminated sheet comprising an anisotropic light scattering layer and a transparent resin layer laminated on at least one side of the anisotropic light scattering layer. Lamination of such a transparent resin layer ensures to restrict or inhibit falling of the dispersed phase particle and to ensure the handleability (or handling property) of the sheet. In such a laminated sheet, a continuous phase and a transparent resin layer may comprise the same resin or the same kind of resin with each other, for example, the continuous phase may comprise a crystalline polypropylene-series resin and the dispersed phase may comprise at least one resin selected from a crystalline polypropylene-series resin, a partial crystalline polypropylene-series resin and a non-crystalline polypropylene-series resin. The thickness ratio of the anisotropic light scattering layer relative to the transparent resin layer may be about 1/99 to 99/1, the total thickness of the sheet may be about 6 to 600 μm, and the total light transmittance of the sheet may be about not less than 85%.

In a more preferably laminated sheet, the transparent resin layer comprises a transparent resin layer (1) and a transparent resin layer (2) (each of which is the same or different from each other), and the transparent resin layer (1) may be laminated on one side of the anisotropic light scattering layer, and the transparent resin layer (2) may be laminated on the other side of the anisotropic light scattering layer. In the laminated sheet having transparent resin layer on both sides, the thickness ratio of the anisotropic light scattering layer relative to the total of transparent resin layers (1) and (2) may be about 1/99 to 99/1, and the thickness ratio of the transparent resin layer (1) relative to the transparent resin layer (2) may be about 1/99 to 99/1. Moreover, the thickness of the transparent resin layer (1) may be almost the same with that of the transparent resin layer (2), for example, the thickness ratio of the transparent resin layer (1) relative to the transparent resin layer (2) may be about 40/60 to 60/40.

In such a sheet, at least one surface (particularly both surfaces) of the sheet may be roughened. The surface-roughening ensures to improve adhesive properties of the sheet to another sheet or film (a prism sheet, an isotropic diffusing sheet). Moreover, the surface-roughening efficiently imparts isotropic light scattering properties at low angles as described above. Incidentally, the surface of the anisotropic scattering sheet may have a concavo-convex (or uneven) structure extending the X-axial direction (or the major axis direction of the dispersed phase).

The anisotropic scattering sheet of the present invention can for example be produced by a process which comprises heat-treating a sheet comprising at least an anisotropic light scattering layer containing a continuous phase and a dispersed phase, wherein the continuous phase and the dispersed phase are different in refraction index from each other, the mean aspect ratio of the dispersed phase is more than 1, and the major axis directions each dispersed phase are oriented to one direction. The heat-treating step may be conducted at a temperature of not less than 70°C (e.g., about 80 to 120°C).

The heat-treating step may be conducted in an appropriate step during or after production process (production step) of the sheet. The heat-treating step may be usually conducted after an orientating step (e.g., an orientation by a drawing, a stretching, or a combination of drawing and a stretching). In the typical process, the heat-treating step may be conducted after orientating the sheet by a monoaxial stretching (particularly, a monoaxial-stretching a sheet with a roll calendering).

Incidentally, the laminated sheet (a heat-treated laminated sheet comprising an anisotropic light scattering layer and a transparent resin layer laminated on at least one side of the anisotropic light scattering layer) may be produced with a conventional manner, and for example, by a process comprising (i) co-extruding (a) a resin constituting a transparent resin layer and (b) a mixture of a resin constituting the continuous phase and a resin constituting the dispersed phase, (ii) orienting the co-extruded sheet, and (iii) heat-treating the oriented sheet.

The present invention includes a device (or unit) comprising the anisotropic scattering sheet (or a device in which the anisotropic scattering sheet is equipped). Such a device (or unit) may be a plane (or flat) light source unit which comprises a tubular light source, a light guide member receiving an incident light from the tubular light source on the lateral side and emerging the light from an emerge surface to illuminate a display unit, wherein an isotropic scattering sheet, a prism sheet, and the above-mentioned anisotropic scattering sheet are interposed between the light guide member and the display unit in arbitrary order. In the plane light source unit, the unit may further comprise a reflective member for reflecting a light from the tubular light source to the display unit side, wherein the tubular light source may be disposed in almost parallel with and adjacent to the lateral side of the light guide member, the reflective member may be positioned at or on the back of the light guide member, and the anisotropic scattering sheet may be disposed between the light guide member and the display unit.

The above-mentioned display apparatus may comprise a display unit (e.g., a liquid crystal display unit), and the above-mentioned plane or flat light source for illuminating the display unit. The display apparatus may be a transmittable display apparatus in which the display unit comprises a transmittable (transmission type) unit (e.g., a liquid crystal display unit). In the apparatus, the anisotropic scattering sheet may be disposed in various directions (e.g., a direction that a main light-scattering direction of the sheet is oriented to the abscissa or ordinate of the display surface in the display unit).

In the display apparatus comprising such a plane or flat light source unit, the apparatus can inhibit changes of the luminance even when an angle somewhat changes in the direction to a display surface of the display apparatus, and can be used without giving a sense of fatigue. For example, a light which passes through an anisotropic scattering sheet is mainly light-scattered in a direction (Y-axial direction) which is perpendicular to the major axis (e.g., the major axis is regarded as X-axial direction). Therefore, in the case where the anisotropic scattering sheet is disposed in a direction which the longitudinal direction (X-axial direction) of the dispersed phase is oriented or directed to the ordinate on the display surface in the display unit, that is, such a direction as a main light-scattering direction (Y-axial direction) is oriented or directed to the lateral direction (Y-axial direction) of the display surface in the display unit, the sheet is capable of light-scattering in the abscissa (horizontal direction) at a wide range of the angle. As a result, even when the angle from the lateral direction changes, the decrease or deterioration of the luminance can be restricted or inhibited.

Moreover, the present invention includes a lenticular lens for a projection television comprising an anisotropic scattering sheet thereof.

Incidentally, throughout this specification, the term "sheet" is used regardless of thickness, thus meaning a film as well.


BRIEF DESCRIPTION OF THE DRAWINGS

Fig. 1 is a schematic exploded perspective view showing an embodiment of the liquid crystal display apparatus comprising the plane light source unit of the present invention.

Fig. 2 is a conceptual view illustrating the anisotropic light-scattering property of the anisotropic scattering sheet shown in Fig. 1.

Fig. 3 is a schematic exploded perspective view showing another embodiment of the liquid crystal display apparatus comprising the plane light source unit of the present invention.

Fig. 4 is a schematic perspective view illustrating the method for measurement of the intensity of scattered light.

Fig. 5 is a graph showing the results of an intensity of scattered light as measured with the sheet according to Examples 1 and 3.

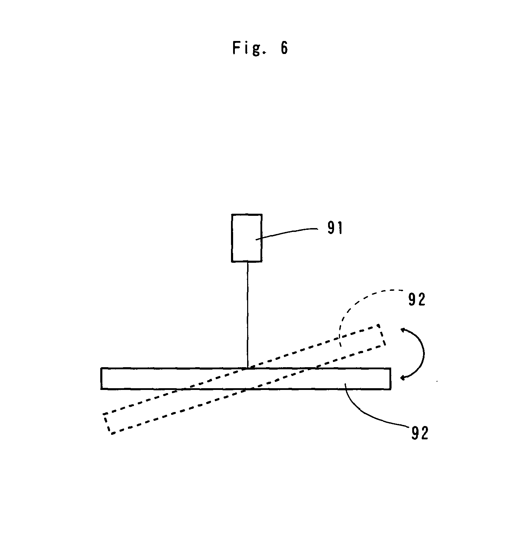

Fig. 6 is a schematic view illustrating a method for measurement of angle dependence on the luminance of the plane light source unit and a transmittable liquid crystal display apparatus comprising the light source unit.

Fig. 7 is a schematic cross-section view showing a conventional transmittable liquid crystal display apparatus.

Fig. 8 is a schematic cross-section view showing a backlight system for use in a transmittable liquid crystal display apparatus.

Fig. 9 is a schematic perspective view of a tubular light source.

Fig. 10 is a schematic cross-section view illustrating the emission distribution of the backlight system.

DETAILED DESCRIPTION OF THE INVENTION

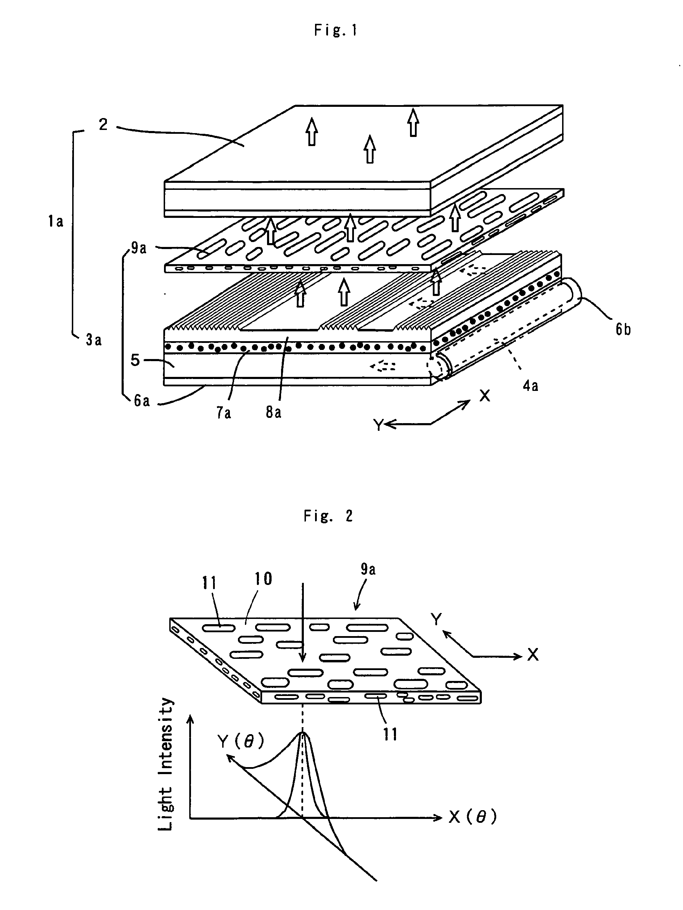

The present invention shall now be described in detail with reference to the attached drawings. Fig. 1 shows a schematic exploded perspective view of an embodiment of the liquid crystal display apparatus (transmittable liquid crystal display apparatus) including the plane or flat light source unit of the present invention. Fig. 2 is a conceptual view illustrating the anisotropic scattering property of the anisotropic scattering sheet shown in Fig. 1.

The above-mentioned display apparatus 1a comprises a liquid crystal display unit (or liquid crystal display panel) 2 as a member to be illuminated, and a plane or flat light source unit 3a for illuminating the display unit 2, wherein the liquid crystal display unit 2 comprises a liquid crystal cell having a liquid crystal sealed therein, and the plane or flat light source unit 3a is disposed behind the display unit (or panel).

The plane or flat light source unit 3a comprises a tubular light source 4a such as a fluorescent tube (cold cathode tube), and a light guide member (light guide) 5 for receiving an incident light from the tubular light source from the lateral side thereof and emerging the light from a flat emerging surface . The light from the emerging surface of the light guide member illuminates the display unit 2. Incidentally, the light guide member 5 comprises a light-transmissive plate-like member, and the tubular light source 4a is disposed in almost parallel with and adjacent to the lateral side (or one side) of the light guide member. Furthermore, a reflecting mirror 6b, for reflecting a light of the light source from the lateral side of the light guide member 5, is disposed at the outer lateral side of the tubular light source 4a, and a reflecting member or reflecting layer 6a, for reflecting a light from the tubular light source 4a to the front or forward direction (the side of the display unit) to guide the light to the display unit 2, is disposed on or at the back side of the light guide member 5.

In such a plane or flat light source unit 3a, the luminance distribution of a light emerged from the tubular light source 4a is not uniform, that is, the luminance distribution in the direction perpendicular to the axis-direction of the tubular light source 4a is not uniform. Therefore, even when a light is emerged from the emerging or emerge surface through (via) the light guide member 5, it is impossible to illuminate the display unit 2 uniformly.

Accordingly, an isotropic scattering or diffusing sheet 7a, and a prism sheet 8a in which sectional triangular fine prisms are formed in parallel for a given direction are arranged in that order on the emerge surface of the light guide member 5. Therefore, a light from the tubular light source 4a is diffused isotropically by the isotropic scattering sheet 7a through the light guide member 5 to be uniformized, and focused in front by the prism sheet 8a, as a result, the luminance can be improved to illuminate the display unit 2 from the back or reverse side. Moreover, when it is assumed that the axis-direction of the tubular light source 4a is the X-axial direction, since an anisotropic scattering sheet 9a, for scattering a light anisotropically, is disposed with addressing the main light-scattering direction to the Y-axial direction on the prism sheet 8a, the light focused by the prism sheet 8a is mainly scattered in the Y-axial direction anisotropically rather than in the X-axial direction.

According to the display apparatus having such a structure, the angle dependence of the luminance can be greatly reduced in the Y-axial direction of the display surface. More specifically, as shown in Fig. 2, the anisotropic scattering sheet 9a comprises a continuous phase 10 and a dispersed phase 11 both of which differ in the refractive index (the refraction index) from each other. Each of the continuous phase 10 and the dispersed phase 11 comprises a resin having high transparency. Moreover, the dispersed phase 11 dispersed in the continuous phase 10 has a mean aspect ratio of larger than 1, and is capable of anisotropically scattering an incident light in the direction of advance thereof. That is, the dispersed phase 11 can scatter a transmission light through a film (strongly) in the direction (Y-direction) perpendicular to the major axis direction (X-direction) of the dispersed phase particle. Therefore, when themajoraxis direction (X-axial direction) of the dispersed phase 11 of the anisotropic scattering sheet 9a is addressed to the vertical direction (X-axial direction) on the display surface, the sheet strongly scatters a light in the lateral or horizontal direction (Y-axial direction). Further, the deterioration of the luminance can be inhibited even when an angle relative to the horizontal direction on the display surface varies significantly, and the display on the display surface can be visually recognized clearly or sharply.

Furthermore, by using the anisotropic scattering sheet 9a, the display unit 2 is illuminated uniformly by a light from the tubular light source 4a, and even when the visual angle on the display surface of the display unit 2 is wider, the display can be visually recognized with the high luminance. That is, the anisotropic scattering sheet 9a is disposed with addressing the major axis (X-axis) of the dispersed phase 11 to the longitudinal direction of the tubular light source 4a (axis-direction, X-direction). The Y-axial direction of the anisotropic scattering sheet 9a is directed or oriented to the Y-axial direction perpendicular to the longitudinal direction of the tubular light source 4a. On the other hand, a light from the tubular light source 4a has uniform emission distribution in the X-axial direction but uneven emission distribution in the Y-axial direction. Moreover, in the case of utilizing the anisotropic scattering sheet 9a, whereas the degree of scattering of incident light is small in the direction of the major axis of the dispersed phase 11 (X-axial direction), the degree of light scattering is large in the direction (Y-axial direction) perpendicular to the major axis. Therefore, the light scattering characteristics $Fx(\theta)$ and $Fy(\theta)$ show the relation of $Fy(\theta)>Fx(\theta)$ as described below. Thus, the sheet scatters an incident light stronger in the Y-axial direction than in the X-axial direction, and even when the tubular light source 4a having uneven luminance distribution and anisotropy is used, the deterioration of the luminance can be inhibited to illuminate the display unit 2 uniformly. Furthermore, since the display unit 2 can be illuminated uniformly only by the intervention of the anisotropic scattering sheet 9a, the structures of the plane or flat light source unit 3a and the display apparatus (particularly the liquid crystal display apparatus) la can be simplified, and the display data of the display unit 2 can be visually recognized clearly or finely.

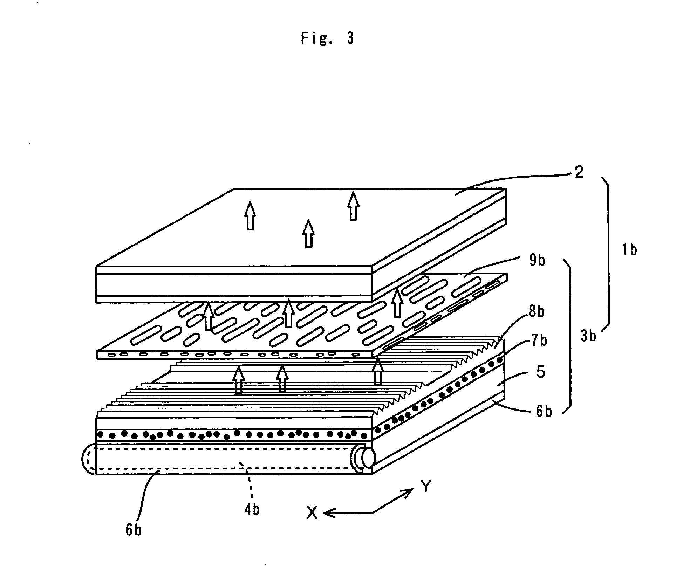

Fig. 3 is a schematic exploded perspective view showing another embodiment of the liquid crystal display apparatus comprising the plane or flat light source unit of the present invention.

According to the embodiment, a plane or flat light source unit 3b of a liquid crystal display apparatus 1b comprises a light guide member 5, and an isotropic scattering or diffusing sheet 7b and a prism sheet 8b which are arranged in that order on the emerging surface of the light guide member, as similar to the apparatus of Fig. 1. Moreover, when it is assumed that the axis-direction of the tubular light source 4b is X-axial direction, an anisotropic scattering sheet 9b for scattering a light anisotropically is disposed on the prism sheet 8b with directing the main light-scattering direction to the horizontal direction of the display unit 2 (X-axial direction). The anisotropic scattering sheet 9b mainly scatters a light focused by the prism sheet 8b anisotropically to the horizontal direction of the display unit 2 (X-axial direction) rather than to the vertical direction thereof (Y-axial direction).

According to the display apparatus having such a structure, even when the tubular light source 4b having uneven luminance distribution and anisotropy is used, the anisotropic scattering sheet 9b scatters a light transmitted through the sheet strongly to the direction (X-axial direction) perpendicular to the longitudinal or major axis direction of the dispersed phase (dispersed phase particle) (Y-axial direction). Therefore, the angle dependence of the luminance can be reduced remarkably in the horizontal direction of the display surface (X-axial direction), and the display unit 2 can be illuminated uniformly and the display on the display surface can be visually recognized clearly or sharply.

Incidentally, the isotropic diffusing sheet, the prism sheet and the anisotropic scattering sheet may be interposed between the light guide member and the display unit. The disposing order of the isotropic diffusing sheet, the prism sheet and the anisotropic scattering sheet is not restricted to a specific one. That is, the anisotropic scattering sheet may be disposed between the light guide member and the display unit. The anisotropic scattering sheet may be disposed or laminated (formed) on any surface of members, for instance, the emerging surface (or the front side or surface) of the light guide of the backlight, the diffusing sheet surface, the prism sheet surface, or the incident surface (or the back surface) of the display unit. The anisotropic scattering sheet may be interposed (intervened) between the light guide member and the display unit without contacting the light guide member and the display unit. The anisotropic scattering sheet is usually disposed on or at the front side of the prism sheet, and preferably disposed or laminated (formed) on the prism sheet. Such an arrangement enables to avoid the deterioration of the luminance at an angle of given direction (in particular, the luminance in one direction) on the display surface of a transmittable liquid crystal display apparatus. Moreover, in the case of disposing the anisotropic scattering sheet on the prism sheet, the anisotropic scattering sheet can also function or serve as a protective film for the sensitive prism sheet with economical advantages.

The disposed direction (the direction to be disposed) of the anisotropic scattering sheet is not particularly limited to a specific one, and the sheet can be disposed toward a suitable direction on the display surface of the display unit, for example, a direction in which a main scattering direction is oriented to the vertical direction of the display surface, the horizontal or lateral direction thereof or the inclined direction thereof. According to the preferred plane or flat light source unit, when it is assumed that the axis-direction of the tubular light source is X-axial direction, the anisotropic scattering sheet is disposed with addressing a main light-scattering direction to the Y-axial direction of the tubular light source. In the preferred display apparatus, the anisotropic scattering sheet is disposed such that main light scattering direction is oriented to the horizontal or lateral direction of the display surface of the display unit.

Incidentally, an isotropic diffusing sheet may comprise a continuous phase having high transparency, and a dispersed phase dispersed in the continuous phase and having the mean aspect ratio of about 1 and differing from the continuous phase in the refractive index. The continuous phase may be formed with a transparent resin or a glass. The dispersed phase may be formed with a transparent resin or an air bubble. The isotropic diffusing sheet is preferably interposed (intervened) between the light guide member and the prism sheet. If necessary, the isotropic diffusing sheet may be interposed (intervened) between the prism sheet and the anisotropic scattering sheet.

Moreover, the structure (or conformation) of the prism sheet is not particularly restricted to a specific one. The prism sheet may comprise a sheet obtained by forming various structure or conformation, for example, uneven lines or rows (or prism lines or rows) composed of an uneven portion (convex portions or groove portions), such as a triangle-shaped section, a trapezoid-shaped section and a sinusoidal-shaped section, on the front and/or back side of a substrate sheet. Moreover, the prism sheet may comprise a sheet having regularly or randomly scattered uneven portions. The direction to be disposed of the prism sheet relative to the axis-direction (X-axial direction) of the tubular light source is not particularly restricted to a specific one, and the prism sheet may be disposed so that the extended direction of the prism lines is oriented toward the X-axial direction or the Y-axial direction. Moreover, if necessary, two pieces of prism sheets may be disposed so that the extended directions of the prism lines are oriented toward a crossing direction each other (for example, the two prism sheets are disposed toward X-direction and Y-direction, respectively).

Furthermore, as the display unit, a variety of display panels can be utilized without limiting to a liquid crystal display unit. The liquid crystal display unit may comprise not only a liquid layer but also various optical members or elements such as a color filter, a polarizing plate (or a polarizing film) and a phase plate. For instance, as the above-mentioned embodiment, the liquid crystal display unit may be formed by laminating a first polarizing film, a first glass substrate, a first electrode formed on the glass substrate, a first alignment membrane laminated on the electrode, a liquid crystal layer, a second alignment membrane, a second electrode, a color filter, a second glass substrate and a second polarizing film in that order.

Incidentally, the light guide member (light guide) has usually a flat or plane surface (emerging surface) in almost parallel with the display unit. The surface of the reflective layer side may be sloped or inclined downward so that the thickness of the side adjacent to the tubular light source may be larger. As the tubular light source, a cold cathode tube (fluorescent tube) is usually utilized. A single tubular light source or a plurality of the tubular light sources may be used.

According to the transmittable liquid crystal display apparatus comprising the plane or flat light source unit, the deterioration of the luminance depending on the visual angle on the display surface (e.g., an angle of a certain direction such as a horizontal direction) can be inhibited. Usually, in the case where the transmittable liquid crystal display apparatus is used in a workplace, a user often changes or moves the angle of vision into the lateral direction (horizontal direction) of a display surface thereof. Therefore, in the display unit, when the anisotropic scattering sheet is disposed with directing a main scattering direction of the sheet to the lateral direction (or horizontal direction), a plane or flat light source unit can suppress the change of the luminance on the lateral or horizontal direction of the display surface. Thus, the apparatus can improve working efficiency of a user (so-called a worker) who utilizes a transmittable liquid crystal display apparatus on a daily life, and the fatigue of the worker can be reduced.

[Anisotropic scattering sheet]

The anisotropic scattering sheet is enough to be a film which is capable of scattering an incident light in the light-advancing direction and has strong scattering intensity in a given direction (e.g., Y-axial direction) without showing isotropic scattering. In addition, even when the scattering angle in the given direction becomes larger, the sheet is enough to be a film having stronger the scattering intensity in the scattering angle in the given direction than that in a scattering angle in the direction perpendicular to the given direction (X-axial direction).

In order to uniformalize the luminance distribution and reduce the decrease of the luminance depending on the angle relative to the display surface, a preferred anisotropic scattering sheet is capable of mainly scattering an incident light in the light-advancing direction and has an anisotropic light-scattering characteristic. Thus, in terms of the scattering characteristic $F(\theta)$ showing the relationship between the scattering angle $\theta$ and the intensity of scattered light F, the sheet may satisfy the following formula in a given scattering angle $\theta$,

at least $F_y(\theta)/F_x(\theta)>1$ (e.g., $F_y(\theta)/F_x(\theta)$=about 1.5 to 100000),

preferably $F_y(\theta)/F_x(\theta)\geq2$ (e.g., $F_y(\theta)/F_x(\theta)$=about 2.5 to 500000),

more preferably $F_y(\theta)/F_x(\theta)\geq3$ (e.g., $F_y(\theta)/F_x(\theta)$=about 4 to 30000), and

particularly $F_y(\theta)/F_x(\theta)\geq5$ (e.g., $F_y(\theta)/F_x(\theta)$=about 5.5 to 20000).

In the formula, $F_x(\theta)$ represents the light-scattering characteristic in the direction of the X-axis, and $F_y(\theta)$ represents the light-scattering characteristic in the direction of the Y-axis perpendicular to the X-axis.

Incidentally, the direction of the X-axis of the anisotropic scattering sheet is usually the major axis direction of the dispersed phase.

The given scattering angle $\theta$ (or a range of the scattering angle $\theta$) satisfying the above light scattering properties is not particularly restricted to a specific one, and the angle $\theta$ may for example be about 5 to 40° (e.g., 5.1 to 40°), preferably about 6 to 35°, and more preferably about 10 to 30°.

Moreover, the anisotropic scattering sheet of the present invention may have anisotropic light scattering properties and further may have isotropic or substantially isotropic light scattering properties at relatively low angles in a range without inhibiting functions as an anisotropic scattering sheet. For example, in a sheet of the present invention, there may be existed an angle $\theta$ in which $F_y(\theta)/F_x(\theta)$ is about 1 (e.g., 0.8 to 1.2, preferably 0.9 to 1.1, more preferably 0.95 to 1.05, and particularly 1) in low angles [e.g., scattering angle $\theta$ of not more than 5° (e.g., about 0 to 5°, preferably about 1 to 4.5°, and more preferably about 2 to 4.3°)]. Incidentally, a sheet having such an isotropic light scattering property only may have anisotropic scattering properties in relatively high angles (e.g., a range of a scattering angle $\theta$ is about 10 to 30°), and the sheet may satisfy a relatively low anisotropic scattering property in the range fulfilling the formula of $F_y(\theta)/F_x(\theta)>1$, for example, fulfilling the formula of $F_y(\theta)/F_x(\theta)$= about 1.01 to 300 (e.g. , about 1.1 to 200), preferably about 1. 5 to 150 (e. g. , about 2 to 100), and more preferably about 2 to 80 (e.g., about 3 to 60) at the scattering angle $\theta$ of 10 to 30°.

Incidentally, an isotropic light scattering property in these low angles may be easily imparted to a sheet by surface-roughening and others as described later.

The anisotropic scattering sheet strongly scatters light in the Y-axial direction in the case where the axial direction of the tubular light source is regarded as X-axis direction. Therefore, in the case where the anisotropic scattering

**EP 1 703 305 A2**

sheet is disposed as a major axis direction of the dispersed phase being toward the longitudinal direction, the sheet can strongly scatter the light in the lateral direction, and deterioration of luminance can be suppressed even if the angle of the lateral direction against the display surface varies in a wide range. Furthermore, in such a sheet, display surface can be visually recognized with clear (distinct or sharp) pictures.

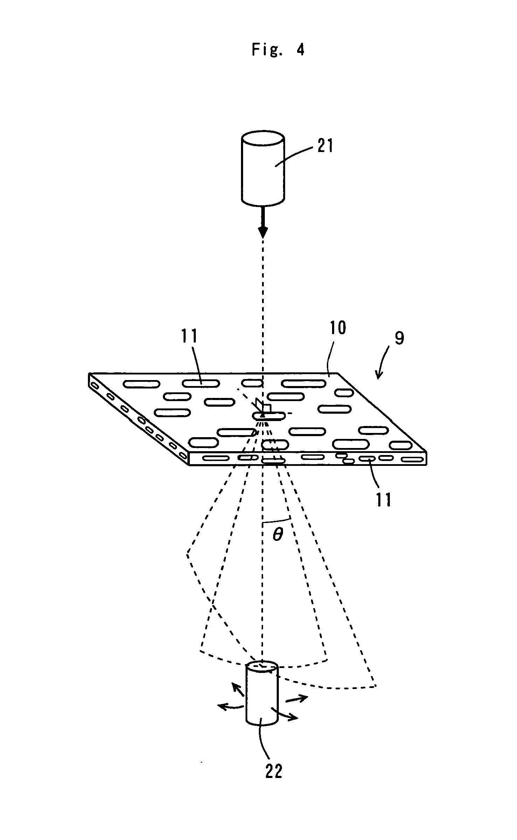

The scattering characteristic F(θ) can be measured using an instrument shown in Fig. 4. This instrument comprises a laser irradiating unit (Nihon Kagaku Eng., NEO-20MS) 21 for projecting a laser light to the anisotropic scattering sheet 9 and a detector 22 for quantitating the intensity of the laser light transmitted through the anisotropic scattering sheet 9. The laser light is emitted at an angle of 90° with respect to (perpendicular to) the anisotropic scattering sheet 9 and the intensity F of light diffused by the film (diffusion intensity) is measured or plotted against the diffusing angle θ, whereby the light-scattering characteristic can be determined.

In the anisotropic scattering sheet, as the anisotropy of the light scattering thereof is higher, the angle dependence of the scattering in a given direction can be lower, therefore, the angle dependence of the luminance can be also lower. In the anisotropic scattering sheet, assuming that the angle which is perpendicular to the display surface is 0°, the luminance can be prevented from decreasing even at the angle of not less than 40°, over that of 20°, on the display surface.

Such a characteristic may be represented by a ratio of the luminance in the angle (θ) relative to the front luminance on the display surface, or by a ratio of the luminances at two angles (θ). That is, the use of the plane or flat light source unit of the present invention makes the value of the above-mentioned rate smaller. For instance, the ratio of the front luminance (N(0°)) at the angle perpendicular to the display surface (θ=0°) relative to the luminance at the angle of 18° (N(18°)) or at the angle of 40° (N(40°)) can be made smaller. Moreover, the ratio of the luminance at the angle of 18° (N(18°)) relative to that at the angle of 40° (N(40°)) can be made smaller. By lessening the above-mentioned ratios, for example, by disposing the anisotropic scattering sheet on a prism sheet of a liquid crystal display apparatus having a conventional structure, it is possible to provide a transmittable liquid crystal display apparatus which is suitable for a business monitor satisfying (or meeting) TCO99 standard.

The anisotropic scattering sheet comprises at least an anisotropic light scattering layer. The anisotropic light scattering layer comprises a continuous phase (such as a resin continuous phase) and a dispersed phase which is dispersed in the continuous phase (such as a particulate or fibrous dispersed phase, particularly a particulate dispersed phase or a dispersed phase particle). The continuous phase and the dispersed phase are different from each other in the refractive index, and are usually incompatible or hardly compatible with each other. The continuous phase and the dispersed phase may be usually formed with a transparent substance.

The resin for constituting the continuous phase and the dispersed phase may include thermoplastic resins [e.g., olefinic resins, halogen-containing resins (including fluorine-containing resins), vinyl alcohol-series resins, vinyl ester-series resins, (meth)acrylic resins, styrenic resins, polyester-series resins, polyamide-series resins, polycarbonate-series resins, cellulose derivatives, etc.] and thermosetting resins (an epoxy resin, an unsaturated polyester resin, a diallyl phthalate resin, a silicone resin, etc.). The preferred resins are the thermoplastic resins.

The olefinic resin may include homo- or copolymers of $C_{2-6}$ olefins (ethylenic resins such as polyethylene, ethylene-propylene copolymer, etc., polypropylene-series resins such as polypropylene, propylene-ethylene copolymer, propylene-butene copolymer, etc., poly(methylpentene-1), propylene-methylpentene copolymer, etc.), and copolymers of $C_{2-6}$ olefins and copolymerizable monomers (ethylene-(meth)acrylic acid copolymer, ethylene-(meth)acrylate copolymer, etc.).

The halogen-containing resin may include vinyl halide-series resins (e. g. , homopolymers of vinyl chloride or fluorine-containing monomers, such as polyvinyl chloride, polytetrafluoroethylene, polychlorotrifluoroethylene, poly(vinyl fluoride), etc., copolymers of vinyl chloride or fluorine-containing monomers, such as tetrafluoroethylene-hexafluoropropylene copolymer, tetrafluoroethylene-perfluoroalkyl vinyl ether copolymers, etc.; and copolymers of vinyl chloride or fluorine-containing monomers and other copolymerizable monomers, such as vinyl chloride-vinyl acetate copolymer, vinyl chloride-(meth)acrylate copolymer, tetrafluoroethylene-ethylene copolymer, etc.), and vinylidene halide-series resins (poly(vinylidene chloride), poly(vinylidene fluoride), copolymers of vinyl chloride or fluorine-containing vinylidene monomers and other monomers).

The derivative of vinyl alcohol-series resin may include polyvinyl alcohol, ethylene-vinyl alcohol copolymers, etc. The vinyl ester-series resin may include homo- or copolymers of vinyl ester-series monomers (e.g., polyvinyl acetate), copolymers of vinyl ester-series monomers and copolymerizable monomers (e.g., vinyl acetate-ethylene copolymer, vinyl acetate-vinyl chloride copolymer, vinyl acetate-(meth)acrylate copolymer, etc.).

The (meth)acrylic resin may include poly(meth)acrylates such as polymethyl(meth)acrylate, methyl methacrylate-(meth)acrylic acid copolymer, methyl methacrylate-(meth)acrylate-(meth)acrylic acid copolymers, methyl methacrylate-(meth)acrylate copolymers, and (meth)acrylate-styrene copolymers (e.g., MS resin). The preferred (meth)acrylic resin may include poly($C_{1-6}$ alkyl (meth)acrylate) and methyl methacrylate-acrylate copolymers.

The styrenic resin may include homo- or copolymers of styrenic monomers (e.g., polystyrene, styrene-α-methylstyrene copolymer, etc.), and copolymers of styrenic monomers and copolymerizable monomers [e.g., styrene-acry-

**10**

lonitrile copolymer (AS resin), styrene-(meth)acrylic ester copolymers (such as styrene-methylmethacrylatecopolymer), styrene-anhydrous maleic acid copolymer, etc.].

The polyester-series resin may include aromatic polyesters obtainable from an aromatic dicarboxylic acid, such as terephthalic acid, and an alkylene glycol (e.g., homopolyesters, e.g., polyalkylene terephthalates such as polyethylene terephthalate, polypropylene terephthalate, polybutylene terephthalate, etc. and polyalkylene naphthalates such as polyethylene naphthalate, polybutylene naphthalate, etc.; and copolyesters containing an alkylene arylate unit as a main component (e.g., not less than 50 mole %, preferably 75 to 100 mole %, more preferably 80 to 100 mole %)), aliphatic polyesters obtainable by using aliphatic dicarboxylic acids such as adipic acid, and liquid-crystalline polyesters.

The polyamide-series resin may include aliphatic polyamides such as nylon 46, nylon 6, nylon 66, nylon 610, nylon 612, nylon 11, nylon 12, etc. and aromatic polyamides such as xylylenediamine adipate (MXD-6), and others. The polyamide-series resin is not restricted to homopolyamides but may be copolyamides.

The polycarbonate-series resin may include aromatic polycarbonates based on bisphenols (e.g., bisphenol A) and aliphatic polycarbonates such as diethylene glycol bis-allyl carbonates.

The cellulose derivative may include cellulose esters (e.g., cellulose acetate, cellulose propionate, cellulose butyrate, cellulose phthalate, etc.), cellulose carbamates (e.g., cellulose phenylcarbamate), cellulose ethers (e.g., alkylcelluloses, benzylcellulose, hydroxyalkylcelluloses, carboxymethylcellulose, cyanoethylcellulose, etc.).

Where necessary, the resin component may have been modified (e.g., rubber-modified).

It is also possible to form a continuous phase matrix from the resin component and graft- or block-copolymerize the dispersed phase component with this matrix resin. As examples of such polymer, there can be mentioned rubber-block copolymers (e.g., styrene-butadiene copolymer (SB resin)) and rubber-grafted styrenic resins (e.g., acrylonitrile-butadiene-styrene copolymer (ABS resin)).

The fibrous dispersed phase may include organic fiber and inorganic fiber. The organic fiber may include heat-resistant organic fibers such as aramid fiber, fully aromatic polyester fiber, polyimide fiber, etc. The inorganic fiber may include fibrous fillers (e.g., inorganic fibers such as glass fiber, silica fiber, alumina fiber, zirconia fiber, etc.) and flaky fillers (e.g. , mica etc.) .

The preferred component for making up the continuous phase or the dispersed phase (discontinuous phase or dispersed phase) may include olefinic resins, (meth) acrylic resins, styrenic resins, polyester-series resins, polyamide-series resins and polycarbonate-series resins, and others. Moreover, the resin constituting the continuous phase and/or dispersed phase may be crystalline or noncrystalline, and the continuous phase and dispersed phase may be formed using noncrystalline resins. In the preferred embodiment, a crystalline resin and a noncrystalline resin can be used in combination. Thus, either one (for example, the continuous phase) of the continuous phase or dispersed phase (discontinuous phase) may be made of a crystalline resin and the other one (for example, the dispersed phase) of the phases may be made of a noncrystalline resin.

The crystalline resin may include olefinic resins (polypropylene-series resin with a propylene content of not less than 90 mole %, such as polypropylene, propylene-ethylene copolymer,etc.,poly(methylpentene-1), etc.), vinylidene-series resins (e.g., vinylidene chloride-series resin), aromatic polyester-series resins (e.g., polyalkylene arylate homopolyesters such as polyalkylene terephthalates, polyalkylene naphthalates, etc., copolyesters containing not less than 80 mole % of an alkylene arylate unit, liquid-crystalline aromatic polyesters, etc.), and polyamide-series resins (e.g., aliphatic polyesters having short-chain segments, such as nylon 46, nylon 6, nylon 66 , etc.). These crystalline resins may be used independently or in a combination of two or more species.

The degree of crystallization of the crystalline resin (e.g., a crystalline polypropylene-series resin) may for example be about 10 to 80%, preferably about 20 to 70%, and more preferably about 30 to 60%.

As the resin constituting the continuous phase, usually a highly transparent and highly heat-resistant transparent resin, may be used. The preferred continuous phase-forming resin is a crystalline resin having high fluidity as a molten property. The combination of such a resin and the dispersed phase-forming resin contributes to a homogeneous (uniform) compounding with the dispersed phase. When a resin having a high melting point or glass transition point (particularly a crystalline resin having a high melting point) is used as the continuous phase-forming resin, its high heat stability and good film-forming properties improve a drawing ratio and the film-formation in a melt-molding process. Therefore, the orientation treatment (or monoaxial stretching) to improve the anisotropic scattering characteristic can be carried out at a comparatively high temperature (e.g., about 130 to 150°C), the processing can be carried out readily, and the dispersed phase can be orientated easily. Furthermore, the film is stable over a broad temperature range (e.g., room temperature to about 80°C) so that the film can be utilized as a component part of a display apparatus or device (liquid crystalline display apparatus or device) with advantage. In addition, crystalline resins (e.g., a crystalline polypropylene resin) are generally inexpensive. The preferred crystalline resin may include a crystalline polypropylene-series resin which is inexpensive and has high heat stability.

The resin constituting the continuous phase may be a resin having a melting point or glass transition temperature of about 130 to 280°C, preferably about 140 to 270°C, and more preferably about 150 to 260°C.

The noncrystalline resin may include vinyl-series polymers (homo- or copolymers of vinyl-series monomers such as ionomers, ethylene-vinyl acetate copolymer, ethylene-(meth)acrylic ester copolymers, polyvinyl chloride, vinyl chloride-vinyl acetate copolymer, poly(vinyl acetate), vinyl alcohol-series resin, etc.), (meth)acrylic resins (e.g., poly (methyl methacrylate), methyl methacrylate-styrene copolymer (MS resin), etc.), styrenic resins (polystyrene, AS resin, styrene-methyl methacrylate copolymer, etc.), polycarbonate-series polymers, noncrystalline polyester-series resins (aliphatic polyesters, polyalkylene arylate copolyesters whose diol component and/or aromatic dicarboxylic acid component has been partially substituted, polyarylate resins, etc.), polyamide-series resins (e.g., aliphatic polyamides having long-chain segments and noncrystalline aromatic polyamides), and thermoplastic elastomers (e.g., polyester elastomers, polyolefin elastomers, polyamide elastomers, styrenic elastomers, etc.). Referring to the noncrystalline polyester-series resins, the polyalkylene arylate copolyester may include copolyesters obtainable by using at least one member selected from (poly) oxyalkylene glycol (e.g., diethylene glycol, triethylene glycol), cyclohexanedimethanol, phthalic acid, isophthalic acid and aliphatic dicarboxylic acids (e.g., adipic acid) as part (e.g., about 10 to 80 mole %, preferably about 20 to 80 mole %, and more preferably about 30 to 75 mole %) of the diol component ($C_{2-4}$alkylene glycol) and/or aromatic dicarboxylic acid component (terephthalic acid, naphthalenedicarboxylic acid). These noncrystalline resins can be used independently or in a combination of two or more species.

As the resin constituting the dispersed phase, a resin being highly transparent, deforming easily at an orientation treatment temperature such as a monoaxial stretching temperature and having practical heat stability is usually employed. In particular, when a resin having a lower melting point or glass transition temperature (or point) than the resin constituting the continuous phase is used, the aspect ratio of dispersed phase particles can be easily increased by an orientation treatment such as monoaxial stretching. Incidentally, the melting point or glass transition temperature of the dispersed phase-forming resin is lower than that of the resin constituting the continuous phase in many instances, and may for example be about 50 to 180°C, preferably about 60 to 170°C, and more preferably about 70 to 150°C.

Among the noncrystalline resins constituting the dispersed phase, at least one resin selected from a noncrystalline copolyester-series resin and a polystyrenic resin is preferred. When the noncrystalline copolyester is used to form the dispersed phase, not only a high degree of transparency can be assured but the glass transition temperature can be about 80°C so that a deformation can be readily introduced to the dispersed phase at the temperature used for orientation treatment such as monoaxial stretching and the dispersed phase can be kept stable over a given temperature range (for example, room temperature to about 80°C) after molding. Moreover, the noncrystalline copolyester (e.g., a polyethylene terephthalate copolyester obtainable by using a diol component such as ethyleneglycol/cyclohexanedimethanol = about 10/90 to 60/40 (mole %), preferably about 25/75 to 50/50 (mole %)) has a high index of refraction (e.g., about 1.57) so that the noncrystalline copolymer may be compounded with the crystalline resin (such as polypropylene-series resin) relatively effectively.

Since the polystyrenic resin has the high refractive index and the high transparency, and has such a high glass transition temperature as about 100 to 130°C, an anisotropic scattering sheet having excellent heat-resistance can be prepared by using the resin. Moreover, the preferred anisotropic scattering sheet can be prepared by using an inexpensive polystyrenic resin at a comparatively small amount relative to the crystalline resin for the continuous phase (e.g., polypropylene-series resin), in addition, at comparatively low drawing ratio. Furthermore, the sheet shows extremely high anisotropy in the case of being subjected to calendering after melt molding.

The combination of the crystalline resin forming the continuous phase with the noncrystalline resin forming the dispersed phase may include, for example, the combination of a crystalline polyolefinic resin (e.g., a crystalline polypropylene resin) with at least one member selected from noncrystalline polyesters (e.g., polyalkylene arylate copolyesters such as polyalkylene terephthalate copolyesters) and polystyrenic resins.

The continuous phase and dispersed phase (discontinuous phase or dispersoid) are constituted of components differing from each other in the index of refraction. By using components differing in the index of refraction, the film can be provided with light-diffusing properties. The difference in refractive index (or refractive light differential) between the continuous phase and the dispersed phase may for example be not less than 0.001 (e.g., about 0.001 to 0.3), preferably about 0.005 to 0.3, and more preferably about 0.01 to 0.1.

As the combination of resins giving such a defined refractive index differential, the following combinations may be mentioned by way of example.

(1) The combination of an olefinic resin (particularly a propylene-series resin) with at least one member selected from the group consisting of an acrylic resin, a styrenic resin, a polyester-series resin, a polyamide-series resin and a polycarbonate-series resin.
(2) The combination of a styrenic resin with at least one member selected from the group consisting of a polyester-series resin, a polyamide-series resin and a polycarbonate-series resin.
(3) The combination of a polyester-series resin with at least one member selected from the group consisting of a polyamide-series resin and a polycarbonate-series resin.

The anisotropic scattering sheet may contain a compatibilizing agent for the continuous phase and the dispersing phase, where necessary. With a compatibilizing agent, the miscibility and mutual affinity of the continuous and dispersed phases can be improved, the formation of defects (voids and other defects) on orientation of the film can be prevented, and the loss of transparency of the film can be prevented. Furthermore, the adhesion between the continuous phase and the dispersed phase can be enhanced. Therefore, even when the film is stretched monoaxially, the adhesion of the dispersed phase on the stretching equipment can be decreased.

The compatibilizing agent can be selected from the conventional compatibilizing agents according to the species of continuous and dispersed phases and, for example, modified resins as modified with oxazoline compounds or modifying groups (e.g., a carboxyl group, an acid anhydride group, an epoxy group, an oxazolinyl group, and other groups), diene- or rubber-containing polymers [e.g., diene-series copolymers (random and other copolymers) obtainable by copolymerization with homo- or copolymers of diene-series monomers or copolymerizable monomers (aromatic vinyl monomers etc.); diene-series graft copolymers such as acrylonitrile-butadiene-styrene copolymer (ABS resin); diene-series block copolymers and their hydrogenation versions such as styrene-butadiene (SB) block copolymer, hydrogenated styrene-butadiene (SB) block copolymer, hydrogenated styrene-butadiene-styrene block copolymer (SEBS), hydrogenated (styrene-ethylene/butylene-styrene) block copolymer, etc.], and diene or rubber-containing polymers modified with the modifying groups (epoxy and other groups). These compatibilizing agents may be used independently or in a combination of two or more species.

As the compatibilizing agent, polymers (a random, block or graft copolymer) having the same components as, or components in common with, the polymer blend constituent resins, or polymers (random, block or graft copolymers) having an affinity for the polymer blend constituent resins are usually employed.

The diene-series monomer may include conjugated dienes such as $C_{4-20}$ conjugated dienes which may optionally be substituted, e.g. , butadiene, isoprene, 1,3-pentadiene, 2,3-dimethyl-1,3-butadiene, piperylene, 3-butyl-1,3-octadiene, phenyl-1,3-butadiene, etc. The conjugated dienes can be used independently or in a combination of two or more species. Among these conjugated dienes, butadiene and isoprene are preferred.

The aromatic vinyl monomer may include styrene, $\alpha$-methylstyrene, vinyltoluenes (p-methylstyrene etc.), p-t-butylstyrene, divinylbenzenes and 1,1-diphenylstyrene. Among these aromatic vinyl monomers, styrene is preferred. The(meth)acrylic monomer may include alkyl (meth)acrylates [e.g., methyl (meth)acrylate] and (meth)acrylonitrile, and others. As the maleimide-series monomer, maleimide, N-alkylmaleimides, N-phenylmaleimide, etc. can be mentioned. These monomers may be used independently or in a combination of two or more species.

The modification mentioned above can be made by copolymerizing a monomer corresponding to the modifying group (e.g., a carboxyl group-containing monomer (or carboxyl group-modifiedmonomer) such as (meth)acrylic acid for carboxyl-modification, maleic anhydride for acid anhydride-modification, a (meth)acrylic monomer for ester-modification, a maleimide-series monomer for maleimide-modification, and an epoxy group-containing monomer such as glycidyl (meth)acrylate for epoxy-modification). The epoxy-modification may be made by epoxidization of an unsaturated double bond.

The preferred compatibilizing agent is an unmodified or modified diene-series copolymer, particularly a modified block copolymer ( e . g . , anepoxidized diene-series block copolymer or an epoxy-modified diene-series block copolymer such as epoxidized styrene-butadiene-styrene (SBS) block copolymer). The epoxidized diene-series block copolymer is not only highly transparent but has a comparatively high softening point of about 70°C, and is capable of compatibilizing resins in many combinations of continuous and dispersed phases to disperse the dispersed phase uniformly.

The block copolymer mentioned above can be constituted of a conjugated diene block or the corresponding partially hydrogenated block and an aromatic vinyl block. In the epoxidized diene-series block copolymer, the double bonds in the conjugated diene blocks may have been partly or completely epoxidized.

The ratio (weight ratio) of the aromatic vinyl block relative to the conjugated diene block (or the corresponding hydrogenated block) [the former/the latter] may for example be about 5/95 to 80/20 (e.g., about 25/75 to 80/20), more preferably about 10/90 to 70/30 (e. g. , about 30/70 to 70/30), and usually about 50/50 to 80/20.

The number average molecular weight of the block copolymer can be selected from the range of, for example, about 5,000 to 1,000,000, preferably about 7,000 to 900,000, and more preferably about 10,000 to 800,000. The molecular weight distribution [the ratio [Mw/Mn] of weight average molecular weight (Mw) relative to number average molecular weight (Mn)] may for example be not more than 10 (about 1 to 10), and preferably about 1 to 5.

The molecular structure of the block copolymer may be linear (straight), branched, radial or any combination thereof. The block structure of the block copolymer may for example be a monoblock structure, a multiblock structure such as a tereblock structure, a trichain-radial tereblock structure or tetrachain-radial tereblock structure. Such block structures may for example be written as X-Y, X-Y-X, Y-X-Y, Y-X-Y-X, X-Y-X-Y, X-Y-X-Y-X, Y-X-Y-X-Y, $(X-Y-)_4Si$, $(Y-X-)_4Si$, etc. where X represents an aromatic diene block and Y represents a conjugated diene block.

The proportion of epoxy groups in the epoxidized diene-series block copolymer is not particularly restricted to a specific one, and in terms of oxygen concentration of oxirane, may for example be about 0.1 to 8 weight %, preferably about 0.5 to 6 weight %, and more preferably about 1 to 5 weight %. The epoxy equivalent (JIS K7236) of the epoxidized block copolymer may for example be about 300 to 1,000, preferably about 500 to 900, more preferably about 600 to 800.

The epoxidized block copolymer (e.g., epoxidized SBS block copolymer) making up the compatibilizing agent is, as described above, not only highly transparent but also has a comparatively high softening point (about 70°C), and is capable of effectively compatibilizing resins in many combinations of continuous and dispersed phases to disperse the dispersed phase resin uniformly. Moreover, the epoxidized block copolymer with an aromatic vinyl block (e.g., styrene block) content of about 60 to 80 weight % has a refractive index which is comparatively high (e.g., about 1.57) and close to the refractive index of the dispersoid resin (e.g., a noncrystalline copolyester) so that the dispersoid resin can be caused to be uniformly dispersed while the light scattering performance of the dispersoid resin is maintained.

Incidentally, the refractive index of the compatibilizing agent (e.g., epoxidized block copolymer) may be approximately the same as that of the dispersoid resin (for example, the difference from the refractive index of dispersoid resin is about 0 to 0. 05, and preferably about 0 to 0.03, more preferably about 0 to 0 .025, and particularly about 0.001 to 0.2.

The epoxidized block copolymer mentioned above can be produced by epoxidizing a diene-series block copolymer (or a partially hydrogenated block copolymer) which has been prepared by the conventional method. The epoxidization can be carried out in accordance with the conventional epoxidizing method, for example by epoxidizing the above-mentioned block copolymer with an epoxidizing agent (e.g., a peracid, a hydroperoxide, etc.) in an inert solvent. The isolation and purification of the epoxidized diene-series block copolymer can be carried out by a suitable method, for example the methodwhich comprises precipitating the copolymer with a poor solvent, the method which comprises adding the copolymer to hot water under stirring and removing the solvent by distillation, or the direct desolventization method (direct desolvation method).

The amount (level) to be used of the compatibilizing agent may be selected from the range of, for example, about 0.1 to 20 weight %, preferably about 0.5 to 15 weight %, and more preferably about 1 to 10 weight %, based on the total resin composition.

In the anisotropic scattering sheet, the preferred combination of continuous phase, dispersed phase and compatibilizing agent may include the combination of a continuous phase composed of a resin having high transparency and high thermal stability (e.g., a crystalline resin such as a crystalline polypropylene-series resin), a dispersed phase composed of a resin having high transparency, good thermal deformability and a fair degree of thermal stability (e.g., a noncrystalline (amorphous) resin such as a noncrystalline copolyester, a polystyrenic resin) and a compatibilizing agent comprising an epoxidized block copolymer.

In the anisotropic scattering sheet, the ratio of the continuous phase relative to the dispersed phase can be judiciously selected from the range of, for example, [former/latter (by weight)] = about 99/1 to 30/70 (e.g., about 95/5 to 40/60), preferably about 99/1 to 50/50 (e.g. , about 95/5 to 50/50), and more preferably about 99/1 to 75/25, with reference to the kinds, melt viscosity and light diffusing properties of the resins.

In the preferred anisotropic scattering sheet, the relative amount of the continuous phase, dispersed phase and compatibilizing agent may for example be as follows.

(1) continuous phase/dispersed phase (weight ratio) = about 99/1 to 50/50, preferably about 98/2 to 60/40, more preferably about 90/10 to 60/40, and particularly about 80/20 to 60/40,
(2) dispersed phase/compatibilizing agent (weight ratio) = about 99/1 to 50/50, preferably about 99/1 to 70/30, and more preferably about 98/2 to 80/20.

When the components are used in such ratios, the dispersed phase can be uniformly dispersed even if pellets of each component are directly melt -kneaded together without compounding the components in advance. Further, the formation of voids can be prevented by orientation treatment, e.g., monoaxial stretching, and a light-scattering film of high transmittance can be obtained.

More specifically, for example, the following resin composition (a) and/or (b) can be compounded readily, and the melt-molding can be carried out with compounding the raw materials only by feeding them, and the formation of voids can be prevented even when monoaxial stretching is carried out, as a result, an anisotropic diffusing film having high transmissivity can be obtained:

(a) a resin composition comprising a crystalline polypropylene-series resin as the continuous phase, a noncrystalline copolyester-series resin as the dispersed phase, and an epoxidized SBS (styrene-butadiene-styrene block copolymer) as the compatibilizing agent, in which the weight ratio of the continuous phase relative to the dispersed phase is 99/1 to 50/50 (particularly, 80/20 to 60/40) and the weight ratio of the dispersed phase relative to the compatibilizing agent is 99/1 to 50/50 (particularly, 98/2 to 80/20);
(b) a resin composition comprising a crystalline polypropylene-series resin as the continuous phase, a polystyrenic resin as the dispersed phase, and an epoxidized SBS as the compatibilizing agent, in which the weight ratio of the continuous phase relative to the dispersed phase is 99/1 to 50/50 (particularly, 90/10 to 70/30) and the weight ratio of the dispersed phase relative to the compatibilizing agent is 99/1 to 50/50 (particularly, 98/2 to 80/20).

In the anisotropic scattering sheet, particles forming the dispersed phase (or the dispersed phase particle, sometimes refers to as a particulate dispersed phase or a dispersed phase particle, regardless of the form of particle or fiber) are each so configured that the ratio of the mean length (or dimension) L of the longitudinal or major axis relative to the mean length (or dimention) W of the minor axis (mean aspect ratio, L/W) is larger than 1 and the major axis directions of each dispersed phase are oriented to a (given) direction (or one direction) (e.g., the X-axis of the film). The preferred mean aspect ratio (L/W) may for example be about 1.1 to 1000 (e.g., 2 to 800), preferably about 5 to 1000, more preferably about 5 to 500 (e.g. , 20 to 500), and may be about 50 to 500 (particularly 70 to 300). The morphology of such a dispersed phase may for example be a football-like (e.g., spheroidal), filamentous or cuboid. The larger the aspect ratio is, the higher is the anisotropy expressed in the scattering of light.

The mean length L of the major axes of the dispersed phase (particle) may for example be about 0.1 to 200 $\mu$m (e.g., about 1 to 100 $\mu$m), preferably about 1 to 150 $\mu$m (e.g., about 1 to 80 $\mu$m), particularly about 2 to 100 $\mu$m (e.g., about 2 to 50 $\mu$m), and usually about 10 to 100 $\mu$m (e.g. , about 30 to 100 $\mu$m, particularly about 10 to 50 $\mu$m). The mean length W of the minor axes of the dispersed phase (particle) may for example be about 0.1 to 10 $\mu$m, preferably about 0.15 to 5 $\mu$m (e.g., about 0.5 to 5 $\mu$m), and more preferably about 0.2 to 2 $\mu$m (e.g., about 0.5 to 2 $\mu$m). The mean length W of the minor axes of the dispersed phase (particle) may for example be about 0.01 to 0.5 $\mu$m, preferably about 0.05 to 0.5 $\mu$m, and more preferably about 0.1 to 0.4 $\mu$m.

The orientation coefficient of the dispersed phase may for example be not less than 0.7 (e.g., about 0.7 to 1), preferably about 0.8 to 1, and more preferably about 0.9 to 1. The higher the orientation coefficient is, the higher is the anisotropy imparted to scattered light.

The orientation coefficient can be calculated by means of the following equation:

$$\texttt{Orientation coefficient = (3<cos}^2\theta\texttt{>-1)/2}$$

In the formula, $\theta$ represents the angle between the major axis of the particulate dispersed phase and the X-axis of the film (or sheet) (when the major axis is parallel to the X-axis, $\theta=0°$); $<\cos^2\theta>$ represents the average of $\cos^2\theta$ values found for individual dispersed phase particles and can be expressed as follows:

$$\texttt{<cos}^2\theta\texttt{> = } \int \texttt{n(}\theta\texttt{)} \cdot \texttt{cos}^2\theta \cdot \texttt{d}\theta$$

In the formula, n($\theta$) represents the percentage (weight percent) of dispersed phase particles having the angle $\theta$ in the total population of dispersed phase particles.

Incidentally, the anisotropic scattering sheet may be provided with directionality of the diffused or scattered light. That is, the film having directionality means that the film has an angle giving a maximum scattering intensity when the diffused light has directionality among the angles of intense scattering in anisotropic diffusion. Referring to the measuring system depicted in Fig. 4, in the case where the diffused light intensity F is plotted against the diffusion angle $\theta$, the curve of plots has a maximum or a shoulder (especially an inflection point such as a maximum) within a given range of diffusion angle $\theta$ (angles excluding $\theta = 0°$) in the case where the diffused light has directionality.

For imparting the directionality to the anisotropic scattering sheet, the refractive index differential between the continuous phase resin and the dispersed phase particles may for example be about 0.005 to 0.2, preferably about 0.01 to 0.1, and the mean length (dimension) of the major axes of the dispersed phase particles may for example be about 1 to 100 $\mu$m, and preferably about 5 to 50 $\mu$m. The aspect ratio may for example be about 10 to 300 (e.g., 20 to 300) and preferably about 40 to 300, and more preferably about 50 to 300.

The anisotropic scattering sheet of the present invention may be a laminated film in which a transparent resin layer is laminated on at least one surface or side (particularly both sides) of an anisotropic light scattering layer. Protection of the anisotropic light scattering layer with the transparent resin layer contributes to prevention of the dispersed phase particle from falling out or sticking. Further, the protection realizes improvement in flaw or scratch resistance of the film or stability in the film-producing process, as well as improvement in strength or handling of the film. In the particularly preferable embodiment, transparent resin layers are laminated on both sides of the anisotropic light scattering layer, that is, a transparent resin layer (1) may be laminated on one side of the anisotropic light scattering layer, and a transparent resin layer (2) may be laminated on the other side of the anisotropic light scattering layer (more specifically, the sheet may be laminated in the order of transparent resin layer/anisotropic scattering layer/transparent resin layer.

The resin for constituting the transparent resin layer can be selected from the resins exemplified as a constituting component of the continuous phase or the dispersed phase. It is preferred that the transparent resin layer is composed of the same kind of resins (in particular, the same resin) as one constituting the continuous phase. That is, in order to form an excellent layer structure and to ensure adhesive properties to the continuous phase, the resin constituting transparent resin layer may be the same kind of resins (in particular, the same resin) as the continuous phase, or may be the same kind of (or same series) of resins as the continuous phase and may have high flowability. More specifically, it is preferred that the resin of the transparent resin layer may comprise a resin which is the same resin with the resin of the continuous phase. The resin constituting the transparent resin layer may be a resin having a lower molecular amount than that of the continuous phase resin, and/or may be more or less copolymerized. For example, if the continuous phase comprises a crystalline polypropylene-series resin, the transparent resin layer preferably comprises at least one resin selected from the group consisting of a crystalline polypropylene-series resin, a partial crystalline (partially crystallized) polypropylene-series resin and a noncrystalline polypropylene-series resin.

Incidentally, the preferred transparent resin for enhancing heat resistance or blocking resistance may include a resin having heat resistance (e.g., a resin having a high glass transition temperature or melting point), a crystalline resin and the like. The glass transition temperature or melting point of the resin constituting the transparent resin layer may be the same degree as that of the resin constituting the continuous phase, and may be, for example, about 130 to 280°C, preferably about 140 to 270°C, and more preferably about 150 to 260°C.

The anisotropic scattering sheet (e.g., an anisotropic light scattering layer and/or a transparent resin layer) may contain the conventional additives, for example stabilizers such as an antioxidant, an ultraviolet absorber, and a heat stabilizer; a plasticizer; an antistatic agent; a flame retardant; and a filler.

The thickness of the anisotropic scattering sheet may for example be about 6 to 600 $\mu$m, preferably about 10 to 400 $\mu$m, and more preferably about 20 to 250 $\mu$m. Incidentally, in the case where the anisotropic scattering sheet comprises an anisotropic light scattering layer and a transparent resin layer, the thickness of the anisotropic light scattering layer may for example be about 3 to 300 $\mu$m, preferably about 5 to 200 $\mu$m (e.g., about 30 to 200 $\mu$m), and more preferably about 5 to 100 $\mu$m (e.g., about 50 to 100 $\mu$m).

Incidentally, in the case where the transparent resin layer is laminated, the thickness of the transparent resin layer may for example be similar to that of the anisotropic scattering layer. In particular, when the thickness of the anisotropic light scattering layer is about 3 to 300 $\mu$m, the thickness of the transparent resin layer may be selected from the range of about 3 to 150 $\mu$m.

In the laminated sheet, the thickness proportion (or ratio) of the anisotropic scattering layer relative to the transparent resin layer (in particular the total of the transparent resin layers (1) and (2)), is, for example, the former/the latter = about 1/99 to 99/1 (e.g., 10/90 to 97/3), preferably about 30/70 to 96/4, and more preferably about 50/50 to 95/5 (e.g., 70/30 to 95/5). Moreover, the thickness proportion (or ratio) of the transparent resin layer (1) relative to the transparent resin layer (2) may be about the former/the latter = 1/99 to 99/1, preferably about 10/90 to 90/10 (e.g., about 20/80 to 80/20), more preferably about 40/60 to 60/40 (e. g. , about 45/55 to 55/45), or may be usually the same ratio (i.e., 50/50) or almost the same (e.g., about 40/60 to 60/40). In particular, it is preferred that the thicknesses of the transparent resin layers on both surfaces are the same or almost the same with each other, because adverse effects such as curl scarcely occur in the anisotropic scattering sheet. Incidentally, in the three-ply structure, thickness of the each layer, i.e., thickness of each transparent resin layer and thickness of the anisotropic scattering layer, is preferred to be almost the same. In order to exploit the characteristics of various properties of the anisotropic scattering layer, however, the thickness is not particularly restricted.

Moreover, the total light transmittance of the anisotropic scattering sheet may for example be not less than 85% (e.g., about 85 to 100%), preferably about 90 to 100%, and more preferably about 90 to 95%.

Incidentally, the surface of the anisotropic scattering sheet (e.g. , the surface of the transparent resin layer), may be treated as far as the optical properties of the sheet is not deteriorated. For example, on the surface of the anisotropic scattering sheet, the releasing agent such as a silicone oil may be applied or the treatment by corona discharge may be given or applied.

Moreover, at least one surface of the anisotropic scattering sheet (e. g. , the surface of the transparent resin layer) may be roughened (or roughening-treated, mat finished). In a particularly preferred embodiment, both surfaces of the anisotropic scattering sheet may be roughened. In particular, both surfaces of a laminated film may be roughened wherein the laminated film comprises an anisotropic scattering layer and transparent resin layers each of which are laminated on both sides of the anisotropic scattering layer, that is, surfaces of the transparent resin layers (1) and (2) may be roughened. Roughening treatment (or surface roughening) of the anisotropic scattering sheet surface ensures to improve adhesive properties to another films or sheets (such as a light diffusing film and a prism sheet) and to prevent the sheet from defects such as wrinkle. As a result, luminance unevenness of the sheet can be more effectively inhibited or prevented. Moreover, the surface-roughening efficiently imparts isotropic light scattering properties at low angles (e.g., scattering angles of not more than 5°) to the sheet with maintaining anisotropic scattering properties of the sheet.

The roughening treatment is not particularly limited to a specific one as far as the surface of the sheet can be roughened to become uneven or not flat (or forming concavo-convex structure). The roughening treatment may be a mat finish or an embossing finish. The roughening treatment may, for example, be conducted by pass an anisotropic scattering sheet between rolls having uneven surfaces (e.g., lattice concavo-convex, random concavo-convex), or pressing a sheet material (or anisotropic scattering sheet material) with a roll having an uneven surface.

Further, on the surface of the anisotropic scattering sheet, uneven sites (or concave-convex sites) may be formed with extending along X-axial direction of the film (the major axis direction of the dispersed phase). The formation of such surface unevenness imparts a higher degree of anisotropy to the film.

The anisotropic scattering sheet of the present invention is a sheet (heat-treated sheet) obtained by heat-treating an unheat-treated sheet (comprising at least an anisotropic light scattering layer, wherein the anisotropic light scattering layer comprises a continuous phase and a dispersed phase which are different in refraction index from each other, the mean aspect ratio of the dispersed phase is more than 1, and the major axis directions of each dispersed phase are oriented to a direction). Probably because the sheet can be improved in heat resistance and heat-stability (or stabilizing property of heat resistance), such a heat-treated sheet is excellent in dimensional resistance or stability. Even if the sheet is exposed to a high temperature, the sheet is never deformed, for example never causes wrinkle due to difference in thermal expansion with other films (e.g., a prism sheet). Therefore, luminance unevenness of the sheet can be prevented or inhibited in high level, and the sheet is stably usable with maintaining optical properties even in using the sheet (particularly using the sheet under circumstances where the sheet is exposed at a high temperature) for a long period of time.

[Production process of the anisotropic scattering sheet]

The anisotropic scattering sheet (heat-treated anisotropic scattering sheet) of the present invention can be produced by heat-treating the sheet (i.e., an anisotropic scattering sheet comprising at least an anisotropic light scattering layer, wherein the anisotropic light scattering layer comprises a continuous phase and a dispersed phase which are different in refraction index from each other, the mean aspect ratio of the dispersed phase is more than 1, and the major axis directions of each dispersed phase are oriented to a given direction) in an appropriate step during or after production process (production step) of the sheet. The anisotropic scattering sheet of the present invention is usually obtained by preparing (producing) the above-mentioned sheet, followed by heat-treating the prepared sheet.

The anisotropic scattering sheet (unheat-treated sheet) can be prepared by dispersing and orienting (or orientation-treating) a dispersed phase-forming component (e.g., a resin component, a fibrous component) in a continuous phase-forming resin. For example, the disperse phase-forming component can be dispersed, according to need, by the method which comprises blending the continuous phase-forming resin with the dispersoid-forming component (e.g., a resin component, a fibrous component) in the conventional manner (e.g., melt-blending methods, tumbler methods, etc.), melt-mixing blended matter, and extruding the molten mixture from a T-die, a ring die, or the like into a film form. The orientation of the dispersed phase can be achieved by, for example, (1) the method comprising drafting (or drawing) the extruded sheet to form the sheet in the course of extrusion, (2) the method comprising stretching the extruded sheet monoaxially, or (3) a combination of the methods (1) and (2). Incidentally, the anisotropic scattering film can also be obtained by (4) the method which comprises mixing the materials (melt-kneading components in the above (1)) together in solution, and with use of the mixture to form the anisotropic scattering sheet by, for example, a casting method.

The melting temperature is not lower than the melting points of the resin components (continuous phase resins, dispersed phase resins), for example, about 150 to 290°C, and preferably about 200 to 260°C. The draw ratio (draft) may for example be about 2 to 40, preferably about 5 to 30, and more preferably about 7 to 20. The stretching factor (multiples) may for example be about 1.1 to 50 (e.g., about 3 to 50), and preferably about 1.5 to 30 (e.g., about 5 to 30).

When the drawing and stretching are conducted in combination, the draw ratio may for example be about 2 to 10, preferably about 2 to 5, and the stretching factor may for example be about 1.1 to 20 (e.g., about 2 to 20), and preferably about 1.5 to 10 (e.g., about 3 to 10).

As the method for enhancing the aspect ratio of the dispersed phase easily, there may be included the the method of subjecting the film (for example, a film-formed (extruded or cast) and cooled film) to monoaxial stretching. The method for monoaxial stretching is not particularly restricted to a specific one, and may include the method in which both ends of a solidified film are pulled in opposite directions (pull stretching), the method using two or more pairs of opposed rollers (2-roll sets) arranged serially (e.g., in a series of 2 pairs) wherein the film is passed over the rollers constituting each roll set by guiding it through the respective roll nips and stretched by driving the 2-roll set on the pay-out side at a speed higher than the speed of the 2-roll set on the feed side (inter-roll stretching), and the method in which the film is passed through the nip of a pair of opposed rollers and stretched under the roll pressure (roll calendering).

The preferred monoaxial stretching technology may include methods which facilitate the mass production of film, such as an inter-roll stretching and a roll-calendering. These methods are utilized as a first stretching step for producing a biaxial stretched film or a method for producing a phase film. In particular, by the roll calendering method, not only a noncrystalline resin but also a crystalline resin can be easily stretched. Thus, when a resin sheet is stretched monoaxially, usually the trouble of "neck-in", the phenomenon of local reduction in the thickness and width of the film, tends to occur. In the roll calender method, however, the trouble of "neck-in" can be precluded so that the film stretching operation is stabilized. Since the film width is kept (or not reduced) before and after stretching as well as the film thickness in the transverse direction can be made uniform, so that the light-scattering characteristic can be uniformized in the transverse direction of the film, the quality assurance of the product can be facilitated, and the usage rate (yield) of the film can be improved. Furthermore, the stretching factor can be freely selected from a broad range. In addition, in a roll calendering method, since the film width can be maintained before and after stretching, the reciprocal of the rate of reduction in film thickness is approximately equal to the stretching factor.

The roll pressure for roll calendering may for example be about $1\times10^4$ to $1\times10^7$ N/m (about 0.01 to 10 t/cm), and preferably about $1\times10^5$ to $1\times10^7$ N/m (about 0.1 to 10 t/cm).

The stretching factor can be selected from a broad range and may for example be about 1.1 to 10, preferably about 1.3 to 5, and more preferably about 1.5 to 3. The roll calendering can be carried out at a thickness reduction rate (draft) of about 0.9 to 0.1, preferably about 0.77 to 0.2, and more preferably about 0.67 to 0.33.

The stretching temperature is not particularly restricted to a specific one inasmuch as the film can be stretched and may be over the melting point or glass transition point of the dispersoid resin (dispersed phase resin). Moreover, when a resin having a glass transition point or melting point higher than that of the dispersoid resin (for example, a resin having a Tg or melting point higher by about 5 to 200°C, preferably about 5 to 100°C) is used as the continuous phase-forming resin and the film is monoaxially stretched while the dispersoid resin is melted or softened, the aspect ratio of the dispersed phase (the dispersed phase particles) can be increased because the dispersoid resin is by far readily deformed as compared with the continuous phase resin so that a film having a particularly large anisotropy of light scattering can be obtained. The preferred stretching temperature may for example be about 100 to 200°C (about 110 to 200°C), and preferably about 110 to 180°C (about 130 to 180°C). The calender roll temperature, in the case where the continuous phase resin is a crystalline resin, may be a temperature not more than the melting point of the resin or may be a temperature in the neighborhood of the melting point. In the case where the continuous phase resin is a noncrystalline resin, the calender roll temperature may be a temperature not more than the glass transition point or a temperature in the neighborhood of the glass transition point.

Incidentally, in the case where the surface of the sheet is roughened, surface-roughening may be conducted at an appropriate step during or after production process (production step) of the sheet. For example, the sheet may be roughened with a roll having an uneven surface (rough or concavo-convex surface) used for sheet production (e.g., a pressure roll or a winding roll). Incidentally, the surface-roughening may be conducted to a cooled sheet (cooled and solidified sheet) in usual. For example, the sheet cooledwith a chill roll may be passed through a pressure roll (such as a rubber roll) having uneven or concavo-convex surface for surface-roughening. Moreover, the surface-roughening may be conducted before or after orientation treatment, or may be conducted together with orientation treatment.

Moreover, the anisotropic scattering sheet having a transparent resin layer(s) (that is, the laminated film) is obtainable by laminating a transparent resin layer on at least one side of the anisotropic scattering layer by a conventional method such as a co-extrusion or a lamination (e.g., a lamination by extruding, a dry laminate (a lamination with adhesives)), followed by orientating the dispersed phase particle in the same manner as mentioned above.

The laminated film is typically obtained such a process as (1) by co-extruding an anisotropic light scattering layer and a transparent resin layer(s) for laminating followed by orientating the laminated film, (2) by film-forming at least one layer selected from an anisotropic light scattering layer and a transparent resin layer, followed by laminating the other layer on the obtained film by extruding-lamination, and orientating the laminated film (e. g. , by film-forming an anisotropic light scattering layer, followed by laminating a transparent resin layer on the both sides of the anisotropic light scattering layer by extruding-lamination, and orientating the laminated film), (3) by film-forming an anisotropic light scattering layer and a transparent resin layer(s) in advance, and laminating both layers, followed by orientating the laminated film. The preferred process may include a process which comprises (1) co-extruding an anisotropic light scattering layer and a transparent resin layer for laminating followed by orientating the laminated film.

In the case of laminating by co-extrusion of (1) (or co-extrusion molding method), the laminated film can be produced in the conventional methods, for example, a multilayer extrusion method (such as a multilayer T die method, and a multilayer inflation (or a multilayer blow-extrusion) method). For example, the co-extrusion may be conducted with laminating a resin constituting the transparent resin layer and a mixture obtained by melt-kneading a resin constituting the continuous phase and a component constituting the dispersed phase (such as a resinous component, or a fibrous component, particularly a resin component) in a conventional method (e.g., a melt blending method, a tumbler method).

In the co-extrusion, the melting temperature may be not less than the melting point or glass transition point of the resin components (e.g., a continuous phase resin, a dispersed phase resin, and a transparent layer resin), for example, about 150 to 290°C.

In the present invention, the laminated film (particularly a co-extruded film) is oriented in the production process of the film (film-formation process). The orientation may be conducted with using the same method with the above method, for example, a method comprising co-extruding resins constituting the laminated film with drafting (or drawing) the co-extruded matter to obtain the laminated film; or a method comprising solidifying a laminated film and stretching the solidified film monoaxially. Through such an orientation treatment, the dispersed phase (dispersed phase particle) can be oriented to the drawing or stretching direction by treating the film (the solidified film with cooling after film-formation). Incidentally, if necessary, the drawing may be combined with the monoaxial-stretching. The orienting treatment, the orienting conditions (e.g., draw ratio, stretching ratio), and the roughening treatment is the same as the described above.

(Heat treatment)

The heat treatment can be usually applied to a prepared sheet (an oriented sheet) as mentioned above. The sheet to be subjected to heat-treatment is not particularly restricted to a specific one, for example, may be cut into a sheet form, may be a winded or rolled sheet (e.g. , a film roll), or may be shaped into a configuration suitable for practical use as an anisotropic scattering sheet.

In the method in which a cut sheet is heat-treated, the sheet may be heat-treated one by one, or may be heat-treated in piles. Although productivity may be deteriorated, the heat treatment of a single sheet one by one ensures definite heat treatment of each sheet. On the contrary, the heat treatment of sheets in piles achieves high productivity, but it is necessary not to cause wrinkles generated by a friction due to piling up the sheets. Moreover, in the methods such as heat-treating an intact film roll (or a whole film roll) and heat-treating a shaped sheet having a practical used form, the methods are excellent in productivity but need to conduct not to cause wrinkles as described above. The heat treatment is preferably conducted with removing generated curls in any case.

In the heat treatment (or aging treatment), the conditions for the heat treatment can be appropriately selected depending on purposes of the anisotropic scattering sheet, for example, the heat treatment may be conducted at a temperature of not less than 30°C (e.g., about 35 to 200°C), preferably not less than 40°C (e.g., about 45 to 160°C), more preferably not less than 50°C (e.g., about 55 to 140°C), and particularly not less than 60°C (e.g. , about 65 to 130°C).

In particular, for an ordinary or common display apparatus (monitor) application, since the sheet is exposed to a high temperature not less than 60°C in many cases, it is preferred to conduct the heat-treatment in a range of preventing the sheet from causing wrinkle or luminance unevenness (or restricting wrinkle generation or luminance unevenness in the sheet) around a temperature of 60°C. Thus the heat treatment temperature may for example be not less than 60°C (e.g., about 65 to 150°C), preferably not less than 70°C (e.g., about 75 to 140°C), and more preferably not less than 80°C (e.g. , about 85 to 120°C) . In particular, since usage as a vehicle equipment frequently requires heat resistance of not less than 80°C, the heat treatment may be conducted at a temperature of not less than 80°C (e.g., about 80 to 120°C).

Moreover, in the heat treatment, time for heating (heat treatment) may for example be not less than 10 minutes (e.g.,20 minutes to 3 days), preferably not less than 1 hour (e.g. , 1.5 to 24 hours), more preferably not less than 2 hours (e.g, 2.5 to 18 hours), and particularly not less than 3 hours (e.g., about 4 to 12 hours).

Incidentally, the heat treatment may be conducted with the conventional heating means (e.g., an oven).

The anisotropic scattering sheet of the present invention is suitably usable over a long time without causing luminance unevenness due to the heat-treatment of the sheet. In particular, the sheet can be used for the purpose requiring higher heat resistance than for a common display apparatus for a monitor. For example, the sheet of the present invention can maintain stable light scattering properties for a long period even if the sheet is used for a vehicle equipment which requires high heat resistance. Moreover, the present invention achieves to obtain an anisotropic scattering sheet having isotropic light scattering properties at low angles (e.g., scattering angles of not more than 5°) and having a high heat stability (property of stabilizing heat-resistance). Such a sheet has a high practicality since the sheet has anisotropic scattering properties as well as isotropic light scattering properties at low angles.

The anisotropic scattering sheet (particularly the laminated film) of the present invention is suitably utilized in a plane or flat light source unit as described above, and further suitably utilized in a display apparatus (a transmittable display apparatus such as transmittable liquid crystal display apparatus) equipped with the plane or flat light source unit.

Moreover, the sheet of the present invention (the present sheet), particularly the laminated sheet, is also applicable to other display apparatuses, for example a reflectable (reflection type) liquid crystal display apparatus, or a projection television. In the case of applying to a reflectable liquid crystal display apparatus, the laminated film can be disposed as capable of cross over a light path (such as incident or reflect light path) to a liquid crystal cell having a liquid crystal sealed therein. For example, in the reflectable liquid crystal display apparatus, the present sheet may be disposed on a diffusing plate or a scattering plate. In the case of applying the present sheet to the reflectable liquid crystal display apparatus, since the film has a high light diffusing property in the Y-axial direction and a low light diffusing property in the X-axial direction, a specific (or particular) reflectable liquid crystal display apparatus can be obtained which has different visual angles in the X-axis and Y-axis directions. Moreover, the sheet having the directivity ensures to obtain a display apparatus which has clear picture and high directivity for viewing area.

In the case of utilizing the anisotropic scattering sheet of the present invention to a projection television, the anisotropic scattering sheet (particularly the laminated sheet) can be employed as a lenticular lens constituting a screen of the projection television. Usage of the present sheet achieves high luminance in televisions because of high transparency and high anisotropy of light diffusion. Moreover, the present sheet ensures to impart high heat stability to the lenticular lens.

In particular, since the anisotropic scattering sheet of the present invention can maintain optical properties even in the exposure to a high temperature, the sheet can be suitably utilized for the purpose (such as a display apparatus for a monitor) used under circumstances or environments in which a high temperature affects (e.g. , a heat released environment from electric power supply, a temperature-rising environment such as the inside of vehicles).

EXAMPLES

The following examples illustrate the present invention in further detail without defining the scope of the invention.
The characteristics of the anisotropic scattering sheet, the plane or flat light source unit comprising (or using) the sheet and the transmittable liquid crystal display apparatus comprising (or using) the sheet in the examples and comparative example were evaluated by the following methods.

[Anisotropy]

Using the measuring system illustrated in Fig. 4, the intensity F of scattered light at the scattering angle θ was measured. As a value showing anisotropy of light scattering, Fy(4°)/Fx(4°), Fy(10°)/Fx(10°), Fy(30°)/Fx(30°) were calculated. Incidentally, the orientating or stretching direction of the anisotropic scattering sheet was designated as X-axial direction and the direction perpendicular to this direction was designated as Y-axial direction.

[Luminance unevenness]

To a backlight unit removed from a transmittable liquid crystal display apparatus, various anisotropic scattering sheets were disposed instead of a protective sheet of the removed backlight unit, followed by putting on a light. The luminance unevenness of the backlight unit surface was visually estimated or determined both at the initial stage and after the heat resistance test, as such the surface was seen from the front side. Incidentally, lighting after the heat resistance test was carried out immediately after heating (immediately after setting the sheet aside from a high temperature oven), and the backlight unit was visually observed under circumstances at almost the same temperature with the temperature of the heat resistance test.

A:     no luminance unevenness
B:     slight luminance unevenness was recognized
C:     heavy luminance unevenness

[Deformation of the anisotropic scattering sheet]

After standing to cool each anisotropic scattering sheet which has already took the heat resistance test, the backlight unit was disassembled and the anisotropic scattering sheet was removed from the backlight unit. The deformation (change in shape) of the anisotropic scattering sheet was visually determined in accordance with the following criteria:

A:     no wrinkle
B:     slight wrinkle was recognized
C:     wrinkle was heavily generated

Incidentally, the heat resistance test was conducted for two kinds or types, i.e., (1) 30 minutes at 70°C, and (2) 30 minutes at 90°C.
The results are shown in Table 1.

Example 1

As the continuous phase resin, 91 parts by weight of crystalline polypropylene-series resin PP (manufactured by Grand Polymer Co.; F1033, refractive index 1.503); as the dispersed phase resin, 7 parts by weight of polystyrenic resin (GPPS) (General polystyrenic resin, manufactured by Daicel Chemical Industries, Ltd.; GPPS#30, refractive index 1.589); and as the compatibilizing agent, 1 part by weight of epoxidized diene-series block copolymer resin (manufactured by Daicel Chemical Industries, Ltd.; Epofriend AT202; styrene/butadiene = 70/30 (by weight), epoxy equivalent 750, refractive index about 1.57) were used. The refractive index difference between the continuous phase resin and the dispersed phase resin was 0.086.

The above continuous and dispersed phase resins were dried at 70°C for about 4 hours, and the dried resins were kneaded in a Banbury mixer. Using a multi-layered type extruder, the kneaded product for forming a center or intermediate layer and the transparent resin (polypropylene-series resin) for forming a surface layer were melted at about 240°C and extruded from a T-die with a draw ratio of about 4 onto a cooling or chilling drum (chill roll) of a surface temperature of 25°C to laminate 60 $\mu$m of each of the surfaces (a transparent resin layer: Japan Polychem Corp., copolymer PP "FG-4") on both sides of 60 $\mu$m of the center layer for obtaining a laminated sheet having three-layered structure (180 $\mu$m thick). The both surfaces of the anisotropic scattering sheet were suitably roughened with applying the chill roll having a matted surface to one side of the sheet and applying a rubber roll having roughened surface to the other side of the sheet (non-chilled side).

Observation of the center layer of the obtained anisotropic scattering sheet by transmission electron microscopy (TEM) revealed that the dispersed phase in the center layer was dispersed or distributed from in the form of approximate sphere-like (suborbicular) (the aspect ratio of about 1 and the average particulate size of about 5 $\mu$m) to in the form of rugby ball-like configuration having a small aspect ratio (the aspect ratio of about 4, the mean length of the major axes of about 12 $\mu$m, and the mean length of the minor axes of about 3 $\mu$m).

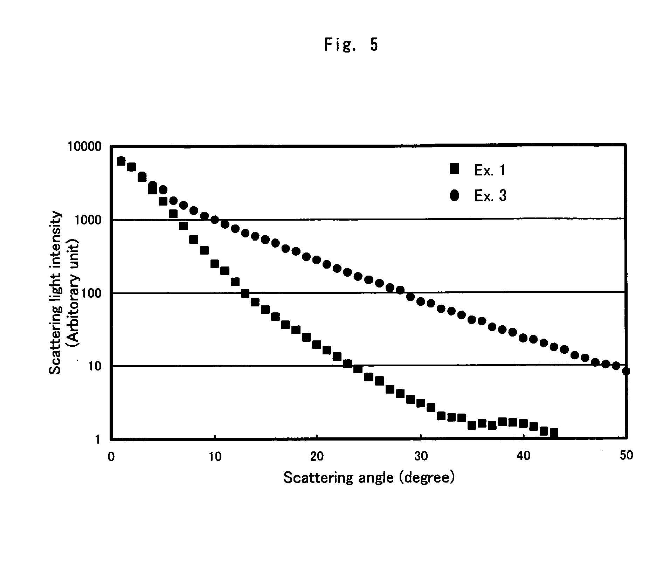

Moreover, in the measurement of the light-scattering characteristic of thus obtained anisotropic scattering sheet, a moderate light-scattering anisotropy was observed as shown in Fig. 5. Since the both surfaces of the sheet were roughened, almost isotropic scattering was shown and the light-scattering characteristic, Fy(4°)/Fx(4°) was about 1 at low angles. Although the degree of anisotropy was Fy>Fx at an angle of not less than 5°, since anisotropy was just expressed under melt-film forming (drawing), Fy(10°)/Fx(10°) was about 5, and Fy(30°)/Fx(30°) was about 30.

Then thus obtained anisotropic scattering sheet was cut into separated sheets, and the cut sheet was heat-treated at 90°C for 8 hours in a high temperature oven to obtain a heat-treated anisotropic scattering sheet.

A liquid crystal cell unit was removed from a commercially available 15 inches-transmittable liquid crystal display apparatus to disassemble. The display apparatus was initially composed of a diffusing sheet, a prism sheet and a protective sheet which were disposed on a light guide of a backlight unit. As shown in Fig.3, the heat-treated anisotropic scattering sheet was disposed instead of the protective sheet in such a direction as the main scattering direction of the anisotropic scattering sheet (X-direction) was directed to the lateral direction (horizontal direction) to obtain a backlight (plane or flat light source unit) without a liquid crystal cell. This backlight was placed on the high temperature oven, and heat resistance test was conducted in the two conditions.

Comparative Example 1

The heat resistance test was conducted for an anisotropic scattering sheet produced in the same way as Example 1 except that the sheet was not heat-treated.

Example 2

The heat resistance test was conducted for an anisotropic scattering sheet produced in the same way as Example 1 except that the sheet was heat-treated at 70°C for 8 hours instead of heat treatment of 90°C for 8 hours.

Example 3

The anisotropic scattering sheet obtained in Example 1 was further monoaxially stretched by rolling calendering method (conditions: a temperature of 125°C, stretching factor of about 2 times (thickness reduction rate of about 1/2), width reduction rate of about 3 %) to obtain a 90 $\mu$m-thick film. Observation of this film by TEM (dyeing with osmic acid) revealed that the dispersed phase of the center layer was shaped like a highly elongated fiber, with the mean length of major axes of about 30 $\mu$m and the mean length of minor axes of about 1.5 $\mu$m.

When the light scattering property of the obtained anisotropic scattering sheet having high anisotropy was measured in the same way as Example 1, remarkable light scattering anisotropy was observed as shown in Fig. 5. Moreover, in the light scattering properties, Fy(4°)/Fx(4°) was 8.2, Fy(10°)/Fx(10°) was about 400, and Fy(30°)/Fx(30°) was about 10000.

Then thus obtained anisotropic scattering sheet was cut into separated sheets, and the cut sheet was heat treated at 90°C for 4 hours in a high temperature oven to obtain the heat-treated anisotropic scattering sheet. In the same way as Example 1, the backlight was placed on the high temperature oven, and heat resistance test was conducted in the two conditions as described above.

Comparative Example 2

The heat resistance test was conducted for an anisotropic scattering sheet produced in the same way as Example 3 except that the sheet was not heat-treated.

Example 4

The anisotropic scattering sheet was produced in the same way as Example 1 except that the same resin with the resin of continuous phase was used as a transparent resin for forming a surface layer.

In the measurement of the light-scattering characteristic of thus obtained anisotropic scattering sheet, since the both surfaces were roughened, the light-scattering anisotropy was almost the same as Example 1, that is, the degree of anisotropy was such that $Fy(10°)/Fx(10°)$ was about 6, and $Fy(30°)/Fx(30°)$ was about 40; and the anisotropic scattering sheet showed isotropic scattering properties at low angles.

Then thus obtained anisotropic scattering sheet was cut into separated sheets, and the cut sheet was heat treated at 90°C for 8 hours in the high temperature oven to obtain the heat-treated anisotropic scattering sheet. In the same way as Example 1, the backlight was placed on the high temperature oven, and heat resistance test was conducted in the two conditions as mentioned above.

Comparative Example 3

The heat resistance test was conducted for an anisotropic scattering sheet produced in the same way as Example 4 except that the sheet was not heat-treated.

Table 1

| | Anisotropic Scattering Property Fy(θ)/Fx(θ) | | | Heat Treatment | Heat Resistance Test | | | | | |
| | θ=4° | θ=10° | θ=30° | | Visual distinction of luminance unevenness | | | Visual distinction of wrinkle generation | | |
| | | | | | Initial | 70°C 30 min. | 90°C 30 min. | Initial | 70°C 30 min. | 90°C 30 min. |
| Ex.1 | 1 | 5 | 30 | 90°C, 8 hr. | A | A | A | A | A | A |
| Com. Ex.1 | 1 | 5 | 30 | No | A | B | C | A | B | C |
| Ex.2 | 1 | 5 | 30 | 70°C, 8 hr. | A | A | A | A | A | B |
| Ex.3 | 8.2 | 400 | 10000 | 90°C, 4 hr. | A | A | A | A | A | A |
| Com. Ex.2 | 8.2 | 400 | 10000 | No | A | A | B | A | B | C |
| Ex.4 | 1 | 6 | 40 | 90°C, 8 hr. | A | A | A | A | A | A |
| Com. Ex.3 | 1 | 6 | 40 | No | A | A | B | A | A | A |

As apparent from the results of Table 1, comparing with Comparative Examples, the anisotropic scattering sheets of Examples did not cause luminance unevenness even when the sheets were subjected to the heat resistance test, and the sheets of Examples scarcely caused wrinkles.

**Claims**

1. An anisotropic scattering sheet which comprises at least an anisotropic light scattering layer comprising a continuous phase and a dispersed phase, wherein
   the continuous phase and the dispersed phase are different in refraction index from each other, the mean aspect ratio of the dispersed phase is more than 1, and the major axis directions of each dispersed phase are oriented to a given direction, and wherein
   the sheet is a heat-treated sheet.

2. A sheet according to Claim 1, which is capable of scattering an incident light in the light-advancing direction and has a light-scattering characteristic F(θ) satisfying the following expression representing the relationship between the light-scattering angle θ and the scattered light intensity F in a range of at least θ = 10 to 30° :

$$Fy(\theta)/Fx(\theta) > 1$$

   wherein Fx(θ) represents the light-scattering characteristic in the X-axial direction and Fy(θ) represents the light-scattering characteristic in the Y-axial direction which is perpendicular to the X-axial direction.

3. An anisotropic scattering sheet according to Claim 1, which is capable of scattering an incident light in the light-advancing direction and has a light-scattering characteristic F(θ) satisfying the following expression representing the relationship between the light-scattering angle θ and the scattered light intensity F in a range of θ being not less than 5°:

   Fy(θ)/Fx(θ) is approximately 1
   wherein Fx(θ) represents the light-scattering characteristic in the X-axial direction and Fy(θ) represents the light-scattering characteristic in the Y-axial direction which is perpendicular to the X-axial direction.

4. A sheet according to Claim 1, wherein the continuous phase comprises a crystalline resin and the dispersed phase comprises a non-crystalline resin.

5. A sheet according to Claim 1, wherein the continuous phase comprises a crystalline polypropylene-series resin.

6. A sheet according to Claim 1, wherein the dispersed phase comprises at least one resin selected from the group consisting of a non-crystalline copolyester-series resin and a polystyrenic resin.

7. A sheet according to Claim 1, wherein the weight ratio of the continuous phase relative to the dispersed phase is 99/1 to 50/50.

8. A sheet according to Claim 1, which further comprises a compatibilizing agent for compatibilizing the continuous phase and the dispersed phase.

9. A sheet according to Claim 8, wherein the continuous phase comprises a crystalline polypropylene-series resin; the dispersed phase comprises at least one resin selected from the group consisting of a non-crystalline copolyester-series resin and a polystyrenic resin; and the compatibilizing agent comprises an epoxidized diene-series block copolymer; the weight ratio of the continuous phase relative to the dispersed phase is 99/1 to 50/50; and the weight ratio of the dispersed phase relative to the compatibilizing agent is 99/1 to 50/50.

10. A sheet according to Claim 1, wherein the mean aspect ratio of the dispersed phase is 1.1 to 1000.

11. An anisotropic scattering sheet according to Claim 1, wherein the mean length of the minor axes of the dispersed phase is 0.1 to 10 μm.

**12.** A sheet according to Claim 1, which is a laminated sheet comprising an anisotropic light scattering layer and a transparent resin layer laminated on at least one side of the anisotropic light scattering layer.

**13.** A sheet according to Claim 12, wherein the continuous phase comprises a crystalline polypropylene-series resin, and the transparent resin layer comprises at least one resin selected from the group consisting of a crystalline polypropylene-series resin, a partial crystalline polypropylene-series resin and a non-crystalline polypropylene-series resin.

**14.** A sheet according to Claim 12, wherein the thickness ratio of the anisotropic light scattering layer relative to the transparent resin layer is 1/99 to 99/1, the total thickness of the sheet is 6 to 600 μm, and the total light transmittance of the sheet is not less than 85%.

**15.** A sheet according to Claim 12, wherein the transparent resin layer comprises a transparent resin layer (1) and a transparent resin layer (2) each of which is the same or different from each other, and the transparent resin layer (1) is laminated on one side of the anisotropic light scattering layer, and the transparent resin layer (2) is laminated on the other side of the anisotropic light scattering layer.

**16.** A sheet according to Claim 15, wherein the thickness ratio of the anisotropic light scattering layer relative to the total of transparent resin layers (1) and (2) is 1/99 to 99/1, and the thickness ratio of the transparent resin layer (1) relative to the transparent resin layer (2) is 1/99 to 99/1.

**17.** A sheet according to Claim 15, wherein the thickness ratio of the transparent resin layer (1) relative to the transparent resin layer (2) is 40/60 to 60/40.

**18.** A sheet according to Claim 1, wherein at least one surface of the sheet is roughened.

**19.** A sheet according to Claim 1, wherein both surfaces of the sheet are roughened.

**20.** A process for producing a sheet recited in Claim 1, which comprises heat-treating a sheet comprising at least an anisotropic light scattering layer containing a continuous phase and a dispersed phase, wherein
the continuous phase and the dispersed phase are different in refraction index from each other, the mean aspect ratio of the dispersed phase is more than 1, and the major axis directions each dispersed phase are oriented to one direction.

**21.** A process according to Claim 20, wherein the heat-treating step is conducted at a temperature of not less than 70°C.

**22.** A process according to Claim 20, wherein the heat-treating step is conducted at a temperature of from 80 to 120°C.

**23.** A process according to Claim 20, which further comprises an orientating step, wherein the heat-treating step is conducted after orientating the sheet by a monoaxial stretching with a roll calendering.

**24.** A process according to Claim 20, which comprises
co-extruding (a) a resin constituting a transparent resin layer and (b) a mixture of a resin constituting the continuous phase and a resin constituting the dispersed phase,
orienting the co-extruded sheet, and
heat-treating the oriented sheet to obtain the sheet is a laminated sheet comprising an anisotropic light scattering layer and a transparent resin layer laminated on at least one side of the anisotropic light scattering layer.

**25.** A plane light source unit which comprises a tubular light source, a light guide member receiving an incident light from the tubular light source on the lateral side and emerging the light from an emerge surface to illuminate a display unit, wherein
an isotropic scattering sheet, a prism sheet, and an anisotropic scattering sheet recited in Claim 1 are interposed between the light guide member and the display unit in arbitrary order.

**26.** A plane light source unit according to Claim 25, which further comprises a reflective member for reflecting a light from the tubular light source to the display unit side, wherein the tubular light source is disposed in almost parallel with and adjacent to the lateral side of the light guide member, the reflective member is positioned at or on the back of the light guide member, and the anisotropic scattering sheet is disposed between the light guide member and the display unit.

**27.** A transmittable display apparatus, which comprises a display unit, and a plane light source unit recited in Claim 25 for illuminating the display unit.

**28.** A lenticular lens for a projection television screen, which comprises a sheet recited in Claim 1.

Fig. 1

Fig. 2

Fig. 3

Fig. 4

Fig. 5

Fig. 6

Fig. 7

Fig. 8

Fig. 9

Fig. 10

**EP 1 703 305 A2**

**REFERENCES CITED IN THE DESCRIPTION**

**Patent documents cited in the description**

- JP 11231315 A
- JP 11084357 A
- JP 11084376 A
- JP 4314522 A
- JP 7114013 A
- JP 2002001858 A
- JP 2002214412 A